(19) Europäisches Patentamt
European Patent Office
Office européen des brevets

(11) EP 0 583 778 B1

(12) EUROPEAN PATENT SPECIFICATION

(45) Date of publication and mention of the grant of the patent:
**22.03.2000 Bulletin 2000/12**

(51) Int. Cl.[7]: **G03C 3/00**

(21) Application number: **93113171.8**

(22) Date of filing: **17.08.1993**

# (54) Packaging material for photographic photosensitive materials and package

Verpackungsmaterial für photographische lichtempfindliche Materialien und Verpackung

Materiel d'emballage pour produits photosensibles et emballage

(84) Designated Contracting States:
**DE FR**

(30) Priority: **17.08.1992 JP 21781692**

(43) Date of publication of application:
**23.02.1994 Bulletin 1994/08**

(73) Proprietor:
**FUJI PHOTO FILM CO., LTD.**
**Kanagawa 250-01 (JP)**

(72) Inventors:
- **Akao, Mutsuo**
  **Minami-Ashigara-shi, Kanagawa (JP)**
- **Kawamura, Makoto**
  **Minami-Ashigara-shi, Kanagawa (JP)**

(74) Representative:
**Grünecker, Kinkeldey,**
**Stockmair & Schwanhäusser**
**Anwaltssozietät**
**Maximilianstrasse 58**
**80538 München (DE)**

(56) References cited:
**EP-A- 0 237 062**
**EP-A- 0 326 181**
**EP-A- 0 408 013**
**EP-A- 0 414 265**
**EP-A- 0 431 591**
**US-A- 5 225 466**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 583 778 B1

## Description

This invention relates to packaging materials for photographic photosensitive materials, such as a packaging film and a container for photographic photosensitive materials and a package thereof.

In general, packaging materials for photographic photosensitive materials, such as containers for a cartridge of photographic film, X-ray shielding materials for packaging photosensitive materials, spools for photographic film and films for packaging photosensitive materials, are formed of various thermoplastic resin compositions. Since the packaging materials for photographic photosensitive materials contact photographic photosensitive materials directly or through other material, the thermoplastic resin composition cannot affect adversely photographic photosensitive materials.

Heretofore, each thermoplastic resin composition to be used for packaging materials for photographic photosensitive materials was previously tested whether it adversely affects photographic photosensitive materials or not, only the resin compositions which were confirmed not to be adversely affected were used. The preliminary test required cost, and moreover, its works were troublesome. Furthermore, the usable thermoplastic resin compositions were restricted, and custom-formulated expensive resin which does not affect photographic photosensitive materials adversely must be used. According to region or country, the resin could not be prepared, and in that case, the resin must be transported from a region or country capable of producing it at a great cost. The greatest problem was that rejected resins by the preliminary rest could not be used for packaging material for photographic photosensitive materials, and it was necessary to seek a buyer and to sell, it as a cheap resin for general use.

EP-A-0237062 describes a container for a photographic film cartridge containing a L-LDPE resin, an oxidation inhibitor and carbon black which is known to have adsorbing properties.

EP-A-0414265 is concerned with a package of a rolled photosensitive material made of a thermoplastic resin wherein the resin preferably contains compounds which adversely affect a photographic photosensitive material. Other components include carbon black, various fatty acid metal salts and antioxidants.

The resin composition for photographic photosensitive materials as disclosed in US-A-5225466 includes a polypropylene resin, a light-shielding material such as carbon black and oxidation inhibitors.

EP-A-0326181 also describes a packaging material for photosensitive materials comprising a polyethylene resin, metal salts of fatty acids, antioxidants and carbon black which is described as being able to adsorb harmful substances.

EP-A-0408013 discloses a packaging material for photosensitive materials comprising a thermoplastic resin, metal salts of fatty acids, carbon black as a light-shielding compound and antioxidants.

It is the object of the present invention to provide a packaging material for photographic photosensitive materials capable of selecting a thermoplastic resin composition which does not adversely affect photographic photosensitive materials without a preliminary test and capable of using various commercial thermoplastic resins in a wide range which adversely affect photographic photosensitive materials.

This object is achieved with a packaging material for photographic photosensitive materials which comprises a thermoplastic resin composition containing:

(i) a substance adversely affecting photographic properties of photographic photosensitive materials,
(ii) 0.0005 to 0.4 wt. % of phenol antioxidant,
(iii) 0.001 to 10 wt. % of a fatty acid metal salt,
(iv) as the light-shielding material, 0.01 to 30 wt. % of carbon black the surface of which is coated with a surface-coating material
(v) a lubricant, and
(vi) a thermoplastic resin
with the proviso that the lubricant is not a fatty acid metal salt.

The inventors investigated in order to achieve the above object, and found the cause of affecting adversely photographic photosensitive materials to complete the invention. That is, cause of the adverse effect photographic photosensitive materials is in the oxidative degradation of thermoplastic resin by heat or oxygen to produce lumps (solid matter of foreign material), aldehyde, ketone or acid to induce pressure marks, abrasion, photographic fogging or sensitivity deviation. Moreover, it was also found that carbon black, titanium oxide, clay and the like contain substances which induce fogging or sensitivity deviation in photographic photosensitive materials, such as cyanogen compounds, aldehydes or sulfur, as imupurities. It was also found that polymerization catalysts of thermoplastic resin and halogen compound, peroxide or the like added in the modification of the thermoplastic resin remain in the thermoplastic resin as residues and adversely affect photographic photosensitive materials.

Figure 1 is a perspective view of a light-shielding bag embodying the packaging material for photographic photosensitive materials of the invention.

Figure 2 is a front view of a spool for a photographic film embodying the packaging material for photographic photosensitive material of the invention.

Figure 3 is a sectionals view of a container for a photographic film cartridge embodying the packaging material for photographic photosensitive materials of the invention.

Figure 4 is a sectional view of a container for a photographic film embodying the packaging material for photographic photosensitive materials of the invention.

Figure 5 is an exploded perspective view of a photographic film unit with lens embodying the package of a photographic photosensitive material of the invention.

Figure 6 is an exploded perspective view of a photographic film cartridge made of a plastic embodying the package of a photographic photosensitive material of the invention.

Figure 7 is a perspective view of a package of a photographic film unit with lens embodying the package of a photographic photosensitive material of the invention.

Figure 8 is an exploded perspective view of the package of a photographic film unit with lens of Figure 7.

Figure 9 is a perspective view of an assembly package of 35 mm photographic films with a cartridge embodying the package of a photographic photosensitive material of the invention.

1 Light-shielding bag
2 Spool for a photographic film
3 Container for a photographic film cartridge
6 Container for a photographic film
9 Photographic film unit with lens
13 Photographic film cartridge
18 Package of a photographic film unit with lens
20 Assembly package of photographic films

The adversely affecting substance which adversely affects photographic properties of photographic photosensitive materials includes heavy metal ions, reducing agents such as various antioxidants and sulfite ion, cyanogen compounds, amine compounds, compounds having unstable (easily releasable) sulfur such as crosslinking agent, halogen compounds, mercaptans, ammonium compounds, hydrogen sulfide, polyalkylene oxides, aldehydes, ketones, hydroxyaldehydes, dialdehydes, unsaturated aldehydes, halogenated aldehydes, cyclohexadienes, various diketones, α-ketoaldehydes, halogenated ketones, hydroxyketones, reaction products of formalin and amine (tetramethylene hexamine, etc.), carboxylic acids (ethylenediaminetetraacetic acid, etc.), phenols, aliphatic amines, radioactive dusts, fluorescent materials, mercury, mercury compounds (readily generates mercury vapor by reducing agent, and even in several ppm, fogging greatly occurs), silicones synthesized from methyldichlorosilane, etc. (containing hydrogenated silicone having strong reducing ability), and iron powder. The above substances exhibit actions to deviate sensitivity, to increase fogging upon photographic photosensitive materials.

In the invention, even in the case of containing the above adversely affecting substances, the adverse affects upon photographic properties of photographic photosensitive materials are avoided by incorporating one or more of an antioxidant, a fatty acid metal salt, a chelate material and an adsorption substance.

Examples of the phenol antioxidant are as follows:

vitamin E (α-tocopherol), vitamin E carboxylic acid esters, 6-t-butyl-3-methylphenol derivatives, 2,6-di-t-butyl-phenol, 2,6-di-t-butyl-p-ethylphenol, 2,6-di-t-butyl-p-cresol (BHT), 2,2'-methylenebis-(4-ethyl-6-t-butylphenol), 2,2'-methylenebis-(4-methyl-6-t-butyl-phenol), 4,4'-butylidenebis(6-t-butyl-m-cresol), 4,4'-thiobis(6-t-butyl-m-cresol), 4,4-dihydroxydiphenylcyclohexane, alkyl group-induced bisphenol, styrene group-induced phenol, 2,6-di-t-butyl-4-methylphenol, n-octadecyl-3-(3' ,5'-di-t-butyl-4'-hydroxyphenyl)propionate, 2,2'-methylenebis(4-methyl-6-t-butylphenol), 4,4'-butylidenebis(3-methyl-6-t-butylphenol), stearyl-β-(3,5-di-4-butyl-4-hydroxyphenyl)propionate, 1,1,3-tris(2-methyl-4-hydroxy-5-t-butylphenyl)butane, 1,3,5-trimethyl-2,4,6-tris(3,5-di-t-butyl-4-hydroxybenzyl)benzene, tetrakis [methylene-3-(3',5'-di-t-butyl-4'-hydroxyphenyl) propionate] methane.

Particularly effective phenol antioxidants are BHT, low volatile high molecular weight phenol antioxidants ("Irganox 1010". "Irganox 1076", trade names of Ciba-Ceigy A.G., "Ionox 330", trade name of Shell, "Good-Rite 3114" trade name of Good-rich, "Topanol CA", trade name of I.C.I.), dilaurylthiodipropionate, distearylthiodipropionate, dialkylphosphate. Two or more antioxidants may be combined.

Examples thereof include the above phenol antioxidants;

Ketone-Amine Condensate Antioxidants:

6-ethoxy-2,2,4-trimethyl-1,2-dihydroquinoline, polymers of 2,2,4-trimethyl-1,2-dihydroquinoline, trimethyldihydroquinoline derivatives,

Arylamine Antioxidants:

Phenyl-α-naphthylamine, N-phenyl-β-naphthylamine, N-phenyl-N'-isopropyl-p-phenylenediamine, N,N'-diphenyl-p-phenylenediamine, N,N'-di-β-naphthyl-p-phenylenediamine, N-(3'-hydroxybutylidene)-1-naphtylamine,

Imidazole Antioxidants:

2-mercaptobenzoimidazole, zinc salt of 2-mercaptobenzoimidazole, 2-mercaptomethylbenzoimidazole,

Phosphite Antioxidants :

Alkyl-induced arylphosphite, diphenylisodecylphosphite, sodium phosphite salt of tris(nonylphenyl)phosphite, trinonylphenylphosphite, triphenylphosphite,

Thiourea Antioxidants:

Thiourea derivatives, 1,3-bis(dimethylaminopropyl)-2-thiourea,

Other Antioxidants:

Those useful for air oxidation, such as dilauryl thiodipropionate, metal deactivators.

Moreover, when antioxidant is combined with carbon black or the like, oxidation inhibition is exercised synergistically. It is particularly preferable to combine a phenol antioxidant, a phosphorus-containing antioxidant and carbon black because of exercising oxidation inhibition greatly.

Particularly preferable antioxidants are hindered phenolic antioxidants The hindered phenolic antioxidants are 1,3,5-trimethyl-2,4,6-tris(3,5-di-tert-butyl-4-hydroxybenzyl)benzene, tetrakis [methylene(3,5-di-tert-butyl-4-hydroxyhydrocinnamate)methane], octadecyl-3,5-di-tert-butyl-4-hydroxy-hydrocinnamate, 2,2',2'-tris (3,5-di-tert-butyl-4-hydroxyphenyl)propionyloxy ethylisocyanurate) 1,3,5-tris(4-tert-butyl-3-hydroxy-2,6-di-methylbenzyl)isocyanurate, tetrakis(2,4-di-tert-butylphenyl)-4,4'-biphenylene diphosphite ester, tetrakis [methylene-3-(3,5-di-tert-butyl-4-hydroxyphenyl)propionate] methane, 4,4'-thiobis-(6-tert-butyl-o-cresol), 2,2'-thiobis-(6-tert-butyl-4-methylphenol), tris-(2-methyl-4-hydroxy-5-tert-butylphenyl;butane, 2,2'-methylene-bis-(4-methyl-6-tert-butylphenol), 4,4'-methylene-bis-(2,6-di-tert-butylphenol), 4,4'-butylidenebis-(3-methyl-6-tert-butylphenol), 2,6-di-tert-butyl-4-methylphenol, 4-hydroxymethyl-2,6-di-tert-butylphenol, 2,6-di-tert-4-n-butylphenol, 2,6-bis(2'-hydroxy-3'-tert-butyl-5'-methylbenzyl)-4-methylphenol, 4,4'-methylene-bis-(6-tert-butyl-o-cresol), 4,4'-butylidene-bis-(6-tert-butyl-m-cresol). According to the properties of antioxidants, two or more kinds of antioxidants may be combined. Preferable antioxidants have a melting point of more than 100°C, particularly preferably more than 120°C.

It is preferable to combine at least one kind of a hindered phenolic antioxidants having a melting point of more than 100°C, preferably more than 120°C which is a representative radical group chain terminator and at least one kind of phosphorous-containing antioxidants, because of enhancing the effect of inhibiting thermal degradation of resins end additives.

Besides, other antioxidants usable in the invention can be selected from those disclosed in "Plastic Data Handbook" (published by Kygyo Chosa Kai), pages 794-799, "Plastic Additives Data Collection" (published by Kagaku Kogyo), pages 327-329, "Plastic Age Encyclopedia, Advance Editions 1986" (published by Plastic Age), pages 211-212, etc.

The mechanism to remove the adverse affect upon photographic photosensitive materials by the antioxidant is explained as follows.

Oxidative degradation tends to occur in the polyolefin resin having more $CH_3$ branches due to a greater oxygen absorption. Accordingly, oxidative degradation occurs in the order to more: polypropylene resin> homopolyethylene resin> ethylene-α-olefin copolymer resin; less. Various polyethylene resins (containing ethylene-α-olefin copolymer resins) and various polypropylene resins (containing propylene-α-olefin copolymer resins, e.g. propylene-ethylene random copolymer resins) being representative crystalline thermoplastic resins are hydrocarbons, and it is considered that when a radical group is produced through dehydration of hydrocarbon in the presence of oxygen, autoxidation proceeds in the following formulas as chain reaction.

RH → R • R • + $O_2$ → ROO • ROO • + RH → ROOH + R • ROOH → RO • + • OH RO • + RH → ROH + R • • OH + RH → HOH + R •

Thus, the oxidation of hydrocarbon is accelerated to produce a great quantity of alcohols, aldehydes, acids and the like, and they react with each other to produce polymer. In order to prevent oxidation of hydrocarbon, it is necessary to intercept the above chain reaction, and antioxidant is used for that purpose.

As the antioxidant, there are radical group chain terminator which reacts with radical groups, mainly ROO •, which are chain carriers, to inactivate them, and peroxide decomposer which decomposes hydroperoxide ROOH which is the main source of radical groups, to stabilize it. The radical group chain terminator includes phenol antioxidant and aromatic amine antioxidant. The peroxide decomposer includes sulfur-containing antioxidant and phosphorus-containing antioxidant. It is preferable to combine the radical group chain terminator and the peroxide decomposer, e.g. a combination of phenol antioxidant and phosphorus-containing antioxidant. Since antioxidant is a reducing agent which adversely affects photographic photosensitive materials, unless its kind and the blending amount is carefully examined, degradation of photographic photosensitive materials becomes a great problem.

The blending amount of the phenol antioxidant is in the range of 0.0005 to 0.4 wt. %, preferably 0.001 to 0.3 wt. %, particularly preferably 0.005 to 0.2 wt. % of the thermoplastic resin composition. In the case of less than 0.0005 wt. % and more than 0.4 wt. %, contamination of die lip is liable to occur. Moreover, in the case of more than 0.4 wt. %, abnormal photographic properties, such as fogging, abnormal sensitivity and abnormal tone, occurs on photographic photosensitive materials.

As the method of blending the antioxidant into the thermoplastic resin composition, the antioxidant may be blended previously with the polyolefin resin in a prescribed concentration to use as compound (the compound method); may be blended with a resin in a relatively high concentration and then it is blended with a resin for dilution in a suitable amount so as to become a prescribed concentration (the masterbatch method), or may be blended directly at the time of producing the resin composition by using a kneader. According to the kind and the content of the antioxidant to be used, the above methods may be combined.

The fatty acid metal salt is a metal salt of a fatty acid having a number of carbon atoms of not less than 8, preferably not less than 10, particularly preferably not less than 12, and not more than 35, preferably not more than 30. Examples of the fatty acid are lauric acid, stearic acid, ricinolcic acid, naphthenic acid, oleic acid, palmitic acid, erucic acid and behenic acid. The metal of the salt is an alkali metal, an alkaline earth metal or the like, such as Li, Mg, Ca, Sr, Ba, Zn, Cd, Al, Sn, Pb. Suitable fatty acid metal salts include zinc stearate, magnesium stearate, calcium stearate, zinc oleate, magnesium oleate and calcium oleate.

The reason for removing its adverse effect upon photographic properties of photographic photosensitive materials by the fatty acid metal salt is that the fatty acid metal sale reacts with halogen compounds in the thermoplastic resin composition to convert to metal halides which do not adversely affect photographic photosensitive materials. Accordingly, it is necessary to add the fatty acid metal salt more than the halogen compounds. The fatty acid metal salt also functions to prevent the occurrence of fogging (the variation of fogging density due to the uneven distribution of light-shielding material or pressure marks) by improving the dispersion of the light-shielding material (carbon black, titanium dioxide or Ultramarine Blue) into the thermoplastic resin composition and by preventing the generation of lumps (solid matter of foreign material).

The blending amount of the fatty acid metal salt is 0.001 to 10 wt. %, preferably 0.005 to 5 wt. %., particularly preferably 0.01 to 3 wt. % of the thermoplastic resin composition. In the case of less than 0.001 wt. %., the blending effect is insufficient. In the case of more than 10 wt. %., the blending effect by the excess amount is not exercised, and bleeding out increases.

As the chelating material, carboxylic acid-type phthalocyanine metal complexes, such as metal phthalocyanine tetracarboxylic acid and metal phthalocyanine octacarboxylic acid, iminodiacetic acid-type chelate resin, aminocarboxylic acid-type chelate resin (ethylenediamine-tetraacetic acid (EDTA)), polyamino-type chelate resin, glucamine-type chelate resin, carrier-type chelate resin and 4-dimethylamino-2,6-pyridine dicarboxylic acid chelate resin can be used. The reason of removing the adverse affect upon photographic properties of photographic photosensitive materials by the chelating material is seemed to be that the chelating material reacts with substances to generate heavy metal ions, mercury or iron powder to convert to stable substances.

A suitable blending amount of the chelating material is 0.01 to 5 wt. %., preferably 0.03 to 3 wt. %, particularly preferably 0.05 to 2 wt. %, of the thermoplastic resin composition. In the case of less than 0.01 wt. %., the blending effect is insufficient, and in the case of more than 5 wt. %, the blending effect by the excess amount is not exercised.

As the adsorption substance, there are various carbon black, styrene-divinylbenzene resin, organic carboxylic acids, mixtures of organic carboxylic acid and zinc compound, mixtures of organic carboxylic acid, zinc compound and aluminum compound, acid clay, activated carbon, zinc carbonate, synthetic zeolite, iron oxide citrate, aliphatic polycarboxylic acid, zinc oxide, ferrous sulfate, zinc carbonate, aluminum sulfate, calcium oxide, mixtures of zinc compound and aliphatic polycarboxylic acid, diatmaceous earth, mixtures of ferrous salt and L-ascorbic acid, mixtures of ferrous

salt and oxycarboxylic acid compound, methacrylate ester resin, porous materials having a specific surface area of not less than 500 $m^2/g$, porous silica, porous alumina and silica gel. As a commercial products, there is "Daimushey" (Dainichi Seika Color and Chemicals Manufacturing Co., Ltd.), in addition to the above ones. The reason of removing the adverse affect upon photographic properties of photographic photosensitive materials by the adsorption substance is seemed to be that the adsorption substance adsorbs substances adversely affecting photographic properties such as mercaptans, acetaldehyde, ammonia compounds, hydrogen sulfide and amines onto the pores of porous materials or adsorbs them through chemical reaction to stabilize them.

A suitable blending amount of the adsorption substance is 0.1 to 50 wt. %., preferably 0.5 to 35 wt. %., particularly preferably 1 to 25 wt. %., of the thermoplastic resin composition. In the case of less than 0.1. wt. %, the blending effect is insufficient, and in the case of more than 50 wt. %., the blending effect by the excess amount is not exercised, and physical strength is degraded.

As the thermoplastic resin which is the matrix resin of the resin composition of the invention, resins having discardability can be used. Taking into consideration the case of reclamation treatment as waste, degradable plastic which is being developed or has already introduced in the market can be used. For example, a biodegradable polymer of "BIOPOL" (ICI) or "Polycaprolactone" (UCC) is utilized, or a polymer indirectly collapsed by blending a biodegradable natural or synthetic polymer as an additive, such as polyethylene blended with starch, can be utilized.

Moreover, it is also possible to utilize a photodegradable polymer, such as ELO copolymer wherein carbonyl groups are introduced into the main chain as a photosensitization group at the time of polymerization of ethylene, i.e. copolymerization of ethylene and carbon monoxide, polymers to which photodegradability is imparted by adding transition metal salt, oxidation accelerator or photosensitizer to base polymer. It is also possible to combine degradable polymers, such as biodegradable polymer, photodegradable polymer and water-soluble polymer (Japanese Patent KOKAI No. 3-129341).

The thermoplastic resin composition is suitable as the material for photographic film cartridge bodies, photographic film units with lens, photographic film spools and the like requiring dimensional accuracy, light-shielding, wear resistance and impact strength, in view of mass-producing ability and cost. Preferable thermoplastic resins for injection molding of photographic film cartridge bodies, photographic film units with lens and photographic film spools are polystyrene resins (including high impact polystyrene resin containing rubber), ABS resin and polyolefin resins (high density polyethylene resin, ethylene-α-olefin copolymer resin, high molecular weight polyethylene resin, homopolypropylene resin, propylene-α-olefin random copolymer resin, propylene-α-olefin block copolymer resin containing light-shielding material (e.g. black pigment such as carbon black, black dye, metal powder, aluminum paste), because of excellent injection moldability and inexpensive cost. Polycarbonate resin is also preferable because of great physical strength and heat resistance, although it is expensive.

In the case of using the thermoplastic resin composition for packaging materials for photographic photosensitive materials, preferable thermoplastic resins are blend resins of high impact polystyrene and various polypropylene resins (homopolypropylene resin, propylene-ethylene random copolymer resin, propylene-ethylene block copolymer resin), various thermoplastic elastomers and/or ethylene copolymer resin and/or synthetic rubber or blend resins of which the principal component is the above resins, containing at least the above ligth-shielding material. When a photographic film spool is composed of two shafts as disclosed in Japanese Patent Application No. 3-176164, the resins of the two shafts may be identical with or different from each other, and in view of recycling of resource, it is preferable to be identical. Particicularly preferable resins for photographic film spool are homopolyethylene resin having a density of not less than 0.93 $g/cm^3$, very high molecular weight polyethylene resin, polyacetal resin, ethylene-α-olefin copolymer resin, propylene-α-olefin copolymer resin, polystyrene resin containing rubber, ABS resin, polycarbonate resin, polyamide resin, and blend resins of two or more of the above resins, because of being excellent in wear resistance, heat resistance and physical strength.

Heretofore, although thermoplastic resins preferable for container bodies and spools have been described, any thermoplastic resin capable of injection molding can be applied to the resin composition of the invention. Moreover, various additives can be added for the purpose of imparting various functions, improving moldability or preventing resin degradation.

For the purpose of the improvement in heat resistance, wear resistance and slipping character, it is preferable to blend crystalline thermoplastic resin in an amount of not less than 50 wt. %, preferably not less than 70 wt. %. The crystalline thermoplastic resin includes various density (low, medium, high density) homopolyethylene resin, ethylene-α-olefin copolymer resin, very high molecular weight polyethylene resin, homopolypropylene resin, propylene-α-olefin copolymer resin, polyamide resin, polyacetal resin and polytetrafluoroethylene resin.

On the other hand, for the purpose of the improvement in dimensional accuracy, the decrease of melting energy by reducing thermal capacity, the prevention of the occurrence of lumps (solid matter of foreign material) and the shortening of molding cycle, it is preferable to blend non-crystalline thermoplastic resin in an amount of not less than 50 wt. %, preferably not less than 70 wt. %. The non-crystalline thermoplastic resins are all thermoplastic resins other than the crystalline thermoplastic resins, and include polystyrene resin, atactic polystyrene resin, poly(methyl methacrylate) resin, polycarbonate resin, ABS resin and high impact polystyrene resin.

The thermoplastic resin composition of the invention can be blended wilt light-shielding material. By blending light-shielding material, light-shielding ability can be ensured, and moreover, oxidative decomposition and coloring trouble of thermoplastic resin can be prevented. In the latter case, even when the resin is colored by heat, the color is made inconspicuous by the light-shielding material.

Carbon black is used as the light-shielding material as shown below.

Carbon black is used because of its rare adverse affect upon photographic properties of photographic photosensitive materials, exercising oxidation inhibition synergistically, having a great light-shielding ability, decreasing the bleeding out of lubricant, surfactant and the like. Carbon blacks are divided into gas black, oil furnace black, channel black, anthratene black, acetylene black, Ketzen carbon black, thermal black, lamp black, vegetable black and animal black according to their origin. Among these, oil furnace carbon black is prefeable in terms of light-shielding character, cost and improvement of properties. On the other hand, since acetylene black and Ketzen carbon black which is modified by-produced carbon black have an antistatic character, they are also preferable, though they are expensive. They may be blended to the oil furnace black in order to improve its character. Although, there are various blending methods, the masterbatch method using masterbatch pellets is preferred in view of cost and less contamination of the working place.

Particularly preferable carbon black has a pH (JIS K 6221) of 4 to 9, preferably pH 6 to 8, a mean particle size measured by electron microscopy of 10 to 120 mμ, preferably 15 to 60 mμ, a volatile components content (JIS K 6221) of less than 3 %, preferably less than 1 %, particularly preferably less than 0.8 %, and an oil absorption value (JIS K 6221) of more than 50 ml/100 g, preferably more than 60 ml/100 g, particularly preferably more than 70 ml/100 g, because the photographic properties are not degraded, such as fogging and sensitivity deviation, of photographic photosensitive materials, no occurrence of troubles, such as foaming and silver streaks during film molding, no generation of microgrits (aggregates of impurities) due to excellent dispersibility.

In general, it should be noted that unless carbon black to be blended has a free sulfur content of less than 0.6 %, preferably less than 0.3 %, particularly preferably less than 0.1 %, a cyanogen compound content of less than 0.01 %, preferably less than 0.005 %, particularly preferably less than 0.001 %, an aldehyde compound content of less than 0.1 %, preferably less than 0.05 %, particularly preferably less than 0.01 %, the carbon black adversely affects photographic properties. However, in the case of the invention, it is not necessary to select carbon black so strictly. Nevertheless, in the case of the packaging materials for packaging high sensitivity photographic films having an ISO photographic speed 400 or more and recent high technology photographic photosensitive materials containing a dye very easily degraded such as sensitizing dye, it is preferable to select the above carbon black.

The content of the light-shielding material is 0.01 to 30 wt. % in total in order to ensure qualities as goods, photographic properties, moldability and economical view point of the molded article for photographic photosensitive materials of the invention. For carbon black excellent in light-shielding ability, a suitable content is 0.05 to 20 wt. %, preferably 0.1 to 10 wt. %, particularly preferably 0.2 to 7 wt. % in total. When the content is less than 0.01 wt. %, unless the thickness of the molded article is thickened, fogging occurs due to insufficient light-shielding ability. The thickening of the molded article results in the retardation of molding speed due to lengthening cooling time, and the cost increases by the increase of resin. When the content exceeds 30 wt. %, dispersibility becomes worse to generate microgrits (lumps) which induce pressure marks and abrasion on photographic photosensitive materials. Moreover, a water content of the molded article increases by the increase of water adsorbed on carbon black, and adversely affects photographic properties, such as fogging, sensitivity deviation and abnormal coloring, upon photographic photosensitive materials. Furthermore, moldability of the molded article is degraded to induce the occurrence of foaming, silver streaks, pinholes, short shot or the like, and physical strength decreases.

The surface of the light-shielding material, i.e. carbon black, is coated by a surface-coating material, in order to improve the dispersibility into resin and the resin fluidity, to prevent the generation of volatile substances harmful to photographic properties, to decrease hygroscopicity, to prevent fouling of die lip, and the like.

Representative coating by the surface-coatig material are as follows:

(1) Using a coupling agent:

Coated with a coupling agent containing azidosilane compound (disclosed in Japanese Patent KOKAI No. 62-32125).
Coated with a silane coupling agent.
Coated with a titanate coupling agent.

(2) Coated by depositing silica followed by depositing by alumina.
(3) Coated with higher fatty acid metal salt, such as zinc stearate, magnesium stearate or calcium stearate.
(4) Coated with surfactant, such as sodium stearate, potassium stearate or hydroxyethylene dodecylamine.

(5) Coated by reacting barium sulfide aqueous solution with sulfuric acid aqueous solution in the presence of an excess amount of barium ion to produce barium sulfate having a mean particle size of 0.1 to 2.5 μm, adding alkaline silicic acid solution thereto to deposit barium silicate on the surface of the barium sulfate, and depositing hydrous silica on the surface of the barium sulfate produced by the decomposition of the barium silicate by adding mineral acid to the slurry.
(6) Coated with a composition consisting of one or more of the oxides selected from hydrated oxides of metal, such as titanium, aluminum, cerium, zinc, iron, cobalt or silicon, and oxides of metal, such as titanium, aluminum, cerium, zinc, iron, cobalt or silicon.
(7) Coated with a polymer having one or more reactive groups selected from aziridine group, oxazoline group and N-hydroxyalkylamide group.
(8) Coated with polyoxyalkylene amine compound.
(9) Coated with cerium cation, selected acid anion and alumina.
(10) Coated with alkoxy titanium derivative having α-hydroxycarboxylic acid residue as substituent.
(11) Coated with polytetrafluoroethylene.
(12) Coated with polydimethylsiloxane or modified silicone.
(13) Coated with phosphate ester compound.
(14) Coated with divalent to tetravalent alcohol.
(15) Coated with olefin wax, such as polyethylene wax or polypropylene wax.
(16) Coated with hydrous aluminum oxide.
(17) Coated with silica of zinc compound consisting of zinc chloride, zinc hydroxide, zinc oxide; zinc sulfate, zinc nitrate, zinc acetate or zinc citrate of a combination thereof.
(18) Coated with polyhydroxy saturated hydrocarbon. Others.

A suitable coating amount is 0.001 to 5 wt. %, preferably 0.01 to 3 wt. %, particularly preferably 0.05 to 1.5 wt. %, against light-shielding material.
The thermoplastic resin composition used in the invention is blended with a lubricant. By blending with a lubricant, various blending effects are exercised, such as the improvement in extruding ability, injection moldability and slipping character, the reduction of the delivery torque of photographic film and prevention of static electrification.
Examples of lubricants are as follows:

Silicone lubricants:

dimethylpolysiloxanes (Sinetsu Chemical Co., Ltd., Toray Silicone Co., Ltd.),

Oleic acid amide lubricants:

"ARMOSLIP-CP" (Lion Akzo Co., Ltd.), "NEWTRON" and "NEWTRON E-18" (Nippon Fine Chemical Co., Ltd.), "AMIDE-O" (Nitto Kagaku K.K.), "DIAMID O-200" and "DIAMID G-200" (Nippon Kasei Chemical Co., Ltd.), "ALFLOW E-10" (Nippon Oil and Fats Co., Ltd.),

Erucic acid amide lubricants:

"ALFLOW P-10" (Nippon Oil and Fats Co., Ltd.),

Stearic acid amide lubricants:

"ALFLOW S-10" (Nippon Oil and Fats Co., Ltd.), "NEWTRON 2" (Nippon Fine Chemical Co., Ltd.), "DIAMID 200" (Nippon Kasei Chemical Co., Ltd.),

Bis fatty acid amide lubricants:

"BISAMIDE" (Nitto Kagaku K.K.), "DIAMID-200 BIS" (Nippon Kasei Chemical Co., Ltd.), "ARMOWAX-EBS" (Lion Akzo Co., Ltd.),

Alkylamine lubricants:

"ELECTROSTRIPPER TS-2" (Kao Corp.),

Hydrocarbon lubricants:

liquid paraffin, natural paraffin, microwax, synthetic paraffin, polyethylene wax, polypropylene wax, chlorinated hydrocarbon or fluorocarbon,

Fatty acid lubricants:

higher fatty acids preferably more than $C_{12}$ or hydroxy fatty acids,

Ester lubricants:

fatty acid lower alcohol esters, fatty acid polyol esters, fatty acid polyglycol esters or fatty acid fatty alcohol esters,

Alcohol lubricants:

polyols, polyglycols or polyglycerols.

Metallic soap:

metal salts such as Li, Mg, Ca, Sr, Ba, Zn, Cd, Al, Sn, Pb salts of higher fatty acids such as lauric acid, stearic acid, ricinoleic acid, 2-ethylhexonic acid, naphthenic acid or oleic acids.

As the preferable lubricant next to fatty amide lubricant, there is silicone lubricant. Although the silicone lubricant is expensive, it is the most suitable as the lubricant added to the heat sealing layer of a light-shielding bag for photographic photosensitive materials requiring complete light-shielding ability. Particularly, as a countermeasure to the degradation of heat sealability of a packaging material composed or a thermoplastic resin composition by blending lubricant, when the following silicone lubricant is blended into the heat sealing layer or the inner or outer surface layer containing not less than 5 wt. %, preferably not less than 20 wt. %, particularly preferably nor less than 50 wt. %, of ethylene copolymer resin (ethylene-$\alpha$-olefin resin which is excellent in sealability with other materials, hot tack properties, heat seal strength and physical strength is the most preferable) of a light-shielding bag, it exercises excellent properties which a conventional packaging material for photographic photosensitive materials does not have. Furthermore, when silicone lubricant is blended, haze increases, and light-shielding ability is improved by 10 %. or more. Traveling ability of photographic film is improved reducing the winding torque by blending into the photographic film cartridge body, the spool or the film unit with lens.

Suitable silicone oils are those having modified siloxane bond, such as dimethylpolysiloxanes and modifications thereof in various grade (Shin-Etsu Silicone, Toray Silicone), polymethylphenysiloxane, olefin-modified silicone, amide-modified silicone, amino-modified silicone, polyether-modified silicone modified with polyethylene glycol and polypropylene glycol, olefin/polyether-modified silicone, epoxy-modified silicone and alcohol modified silicone. Among them, preferred ones are olefin-modified silicone, amide-modified silicone, polyether-modified silicone, olefin/polyether-modified silicone polydialkylsiloxane preferably having a number of carbon atms of 1-4 and the like, because of excellent in the improvement in light-shielding ability, sliding ability and moldability in the case of injection molding articles for photographic film. Particularly, in the case that the packaging material for photographic photosensitive materials is a single layer or multilayer film, the silicone oil improves the friction coefficient of the film under heated conditions, decreases sliding resistance generated during hot plate scaling in an automatic packaging machine and prevents the occurrence of wrinkling. Thereby, the silicone oil provides a basis of producing a film which has a beautiful appearance, a high sealability, and adhesion to an article to be packaged without sagging. It prevents the degradation of gloss by sliding to form a fine scaled portion. In the case of using silicone oil, friction coefficient at high temperature can be not more than 1.4 for sliding heat seal.

The above silicone oil has preferably a viscosity at ordinary temperature of 10 to 1000 $cm^2/s$ (1,000 to 100,000 centistokes), more preferably 50 to 300 $cm^2/s$ (5,000 to 30,000 centistokes), particularly preferably 70 to 200 $cm^2/s$ (7,000 to 20,000 centistokes), taking handling, cost, no adverse affect upon photographic photosensitive materials and the like into consideration. A suitable blending amount is 0.01 to 5 wt. %, preferably 0.03 to 3 wt. %, particularly preferably 0.05 to 1.5 wt. %, although it varies according to the kind and the object of use.

The silicone lubricant may be a single kind, a combination of two or more kinds or a cobmination with other lubricant or plasticizer. Combinations of the above silicone lubricant and the aforementioned various fatty acid amide lubricant, i.e. oleic acid amide lubricants, erucic acid amide lubricants, stearic acid amide lubricants and bis fatty acid amide lubricants are preferable.

Effects of blending silicone oil are as follows. Silicone oil improves the dispersibility of resin, decreases motor load of screw and prevents the occurrence of melt fracture. Slipping character can be ensured sufficiently without blending fatty acid amide which tends to bleed out to generate white powder. A fine sealed portion can be formed by decreasing the friction coefficient of a molded article in heated conditions, improving automatic bag-making ability, and preventing the occurrence of wrinkling at the time of heat sealing and the reduction o gloss by sliding. When light-shielding material is combined, light-shielding ability can be improved synergistically, and light-shielding ability can be ensured, even though the blending amount of light-shielding material which degrades properties is decreased.

In general, halogen compound, such as aluminum halide, is used as polymerization catalyst for producing thermoplastic resin, e.g. ethylene-α-olefin copolymer resin. It was found that halogen compounds contained in thermoplastic resin as residue of the polymerization catalyst or impurities of additives adversely affect photographic properties, such as the occurrence of fogging, abnormal sensitivity or abnormal tone. The adverse affect upon photographic properties such as fogging can be removed by blending a higher fatty acid metal salt (metallic soap). The higher fatty acid is lauric acid, stearic acid, ricinoleic acid, naphthenic acid, oleic acid, erucic acid, palmitic acid, behenic acid or the like, and the salt of metal is Li, Mg, Ca, Sr, Ba, Zn, Cd, Sn or Pb. Preferable higher fatty acid metal salts are zinc stearate, magnesium stearate and calcium stearate. A suitable blending amount is 0.001 to 10 wt. %, preferably 0.005 to 5 wt. %, particularly preferably 0.01 to 3 wt. %. For example, when a L-LDPE resin film containing 3 wt. % of carbon black and 1.5 wt. % of zinc stearate was contacted with color photographic paper at 50°C under 80 % RH for 5 days followed by development, the concentration of fogging was decreased from 0.12 to 0.02. Moreover, it improved the dispersibility of carbon black which has a great Light-shielding ability but tends to agglomerate to form lumps, and the generation of lumps was decreased to less than 1/10.

As to the blending amount of the lubricant in the thermoplastic resin composition, in the case of fatty acid amide lubricant having a great lubricating ability and being liable to bleed out, a suitable blending amount is 0.01 to 1 wt. %. In the case of the aformentioned hydrocarbon lubricant, fatty acid lubricant, ester lubricant and alcohol lubricant, a suitable blending amount is 0.01 to 10 wt. %, preferably 0.05 to 6 wt. %, particularly preferably 0.1 to 3 wt. %.

The thermoplastic resin composition used in the invention can be blended with waterproofing substance. By blending waterproofing substance, adhesion of dew onto packaging material can be prevented, and transparency of clear packaging materials (e.g. clear container for photographic film cartidge, assembly package of 35 mm photographic films, pillow-type film package of photographic film unit with lens, shrink package) can be ensured so as to observe the photographic photosensitive materials from the outside of the packaging material under fine conditions.

The waterproofing agent includes diglycerine monostearate ester, polyglycerine monopalmitate ester, sorbitan monolaurate ester, sorbitan monoerucate, polyoxyethylene sorbitan fatty acid ester, stearic acid monoglyceride, palmitate monoglyceride, oleate monoglyceride, laurate monoglyceride, polyoxyethylene nonylphenyl ether, sorbitan sesquipalmitate, diglycerine sesquioleste, sorbitol fatty acid ester, sorbitol fatty acid dibasic acid ester, diglycerine fatty acid dibasic acid ester, glycerine fatty acid dibasic acid ester, sorbitan fatty acid dibasic acid ester, sorbitan palmitate, sorbitan stearate, sorbitan palmitate propylene oxide 3 moles adduct, sorbitan palmitate propylene oxide 2 moles adduct, sorbitol stearate, sorbitol stearate ethylene oxide 3 moles adduct, diglycerine palmitate, glycerine palmitate and glycerine palmitate ethylene oxide 2 moles adduct.

A suitable blending amount of the waterproofing substance is 0.01 to 3 wt. %, preferably 0.05 to 2 wt. %, more preferably 0.1 to 1.5 wt. %, particularly preferably 0.15 to 1 wt. %. When the blending amount is less than 0.01 wt. %, antifog effect is insufficient. The effect of inhibiting the deposition in a form of white powder of additives liable to bleed out, such as lubricant and antioxidant is also insufficient. When the blending amount exceeds 3 wt. %, although the antifog effect is sufficiently exercised, the effect increased by increasing the blending amount is little. Moreover, the surface of the molded article becomes greasiness, and dust is liable to adhere. When dust adheres on a photographic film, uneven developing rate trouble occurs.

The thermoplastic resin composition used in the invention may be blended with surfactant or conductive material in order to prevent the generation of static mark troubles caused by static electrification.

As the surfactant, there are nonionic surfactants (representative component: polyoxyethylene glycols), anionic surfactants (representative component: polyoxyethylene glycols), cationic surfactans (representative component: quaternary ammonium salt) and amphoteric surfactants. As the conductive material, there are akylamine derivatives, fatty acid derivatives, various lubricants, carbon black, graphite, pigments for coating metal surface, metal powders, metal flakes, carbon fiber, metal fibers, and whiskers (potassium titanate, aluminum nitride, alumina).

Examples of the surfactant are shown below.

Nonionic surfactants (representative component; polyoxyethylene glycol compound):

Polyethyleneglycol fatty acid ester, polyoxyethylene sorbitan fatty acid ester, polyoxyethylene fatty alcohol ester, polyoxyethylene glycerine fatty acid ester, polyoxyethylene fatty amine, sorbitan monofatty acid ester, fatty acid pentaerythritol, fatty alcohol-ethylene oxide adduct, fatty acid-ethylene oxide adduce, fatty amino acid

or fatty amide-ethylene oxide adduct, alkyl phenol-ethylene oxide adduct, alkyl naphthol-ethylene oxide adduct, partial fatty ester of polyol-ethylene oxide adduct and various other nonionic antioxidants disclosed in Japanese Patent KOKOKU No. 63-26697.

Anionic surfactants (respresentative component; polyoxyethylene glycol compound):

Sodium salt of ricinoleic acid sulfate ester, various fatty acid metal salts, sodium salt of ricinoleate ester sulfate ester, sulfated oleic acid ethylaniline, sulfate ester salt of olefin, sodium salt of oleil alcohol sulfate ester, alkyl sulfate ester salt, fatty acid ethyl sulfonic acid salt, alkyl sulfonic acid salt, alkyl naphthalene sulfonic acid salt, alkyl benzene sulfonic acid salt, succinic acid ester sulfonic acid salt and phosphate ester salt.

Cationic surfactants (representative component; quaternary ammonium salt:

Primary amine salts, tertiary amine salts, quaternary ammonium salts, pyridine derivatives,

Amphoteric surfactants:

Carboxylic acid derivatives, imidazoline derivatives, betaine derivatives.

A suitable blending amount of the surfactant is 0.01 to 5 wt. %, preferably 0.01 to 3 wt. %, particularly preferably 0.03 to 2 wt. %, of the thermoplastic resin composition. A suitable blending amount of the conductive material is 0.1 to 40 wt. %, preferably 0.3 to 30 wt. %, particularly preferably 0.5 to 20 wt. %. When the blending amount is less than the above lower limit, the generation of static marks cannot be removed. On the otter hand, when the blending amount is more than the upper limit, the blending effect does not increase by the excess amount.

The thermoplastic resin composition used the invention may be blended with nucleating agent. Particularly, the blending effect is greatly exercised on the aforementioned crystalline thermoplastic resin. By blending nucleating agent various effects are exercised, such as the improvement of crystallization rate, shortening of molding cycle, decrease of molding troubles, the improvement in rigidity, the improvement in transparency, resistance to deformation and the improvment in physical strength.

As the nucleating agent, there are organic nucleating agents and inorganic nucleating agents.

The organic nucleating agent includes carboxylic acids, dicarboxylic acids, their salts and anhydrides, salts and esters of aromatic sulfonic acids, aromatic phosphinic acids, aromatic phosphonic acids, aromatic carboxylic acids and their aluminum sales, metal salts of aromatic phosphoric acids, alkyl alcohols having a number of carbon atoms of 8 to 30, condensation products of a polyhydric alcohol and an aldehyde, and alkylamines. Examples are aluminum p-t-butylbenzoate, 1,3,2,4-dibenzylidenesorbitol, the di-substituted benzylidene-sorbitol represented by the following formula;

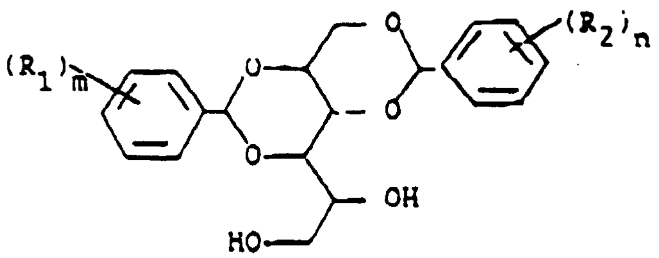

In the formula, $R_1$ and $R_2$ indicate an alkyl group or an alkoxy group having a number of carbon atoms of 1 to 8 or a halogen, and m and n are 0 to 3 and $m+n \geqq 1$ .

metal salts, such as calcium salt and magnesium salt, of stearyl lactic acid, the compounds, such as N-(2-hydroxyethyl)-stearylamine, represented by the following formula;

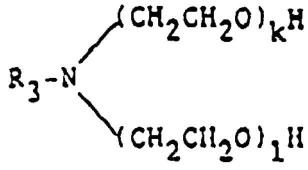

In the formula, $R_3$ indicates an alkyl group having a number of carbon atoms of 8 to 30, and k and l are 0 to 10 and k+l≧1 .
metal salts, such as lithium salt, sodium salt, potassium salt, calcium salt and magnesium salt, of 1,2-dihydroxystearic acid, stearyl alcohol, lauryl alcohol, sodium benzoate, benzoic acid, and sebacic acid.

Among the organic nucleating agent, sorbitol compound is excellent in a great crystallization-accelerating effect, rare adverse affect on photographic properties, the decrease of molding troubles, the shortening of molding cycle and the improvement in rigidity and in appearance.

Examples of the sorbitol compound are as follows:

di-(o-methylbenzylidene)sorbitol
o-methylbenzylidene-p-methylbenzylidene sorbitol
di-(m-methylbenzylidene)sorbitol
m-methylbenzylidene-o-methylbenzylidene sorbitol
di-(p-methylbenzylidene)sorbitol
m-methylbenzylidene-p-methylbenzylidene sorbitol
1 • 3-heptanylidenesorbitol
1 • 3,2 • 4-diheptanylidenesorbitol
1 • 3,2 • 4-di(3-nonyl-3-pentenylidene)sorbitol
1 • 3-cyclohexanecarbylidenesorbitol
1 • 3,2 • 4-dicyclohexanecarbylidenesorbitol
1 • 3,2 • 4-di(p-methylcyclohexanecarbylidene)sorbitol
Aromatic hybrocarbon groups or derivatives thereof
1 • 3-benzylidenesorbitol
1 • 3,2 • 4-dibenzylidene-D-sorbitol
1 • 3,2 • 4-di(m-methylbenzylidene)sorbitol
1 • 3,2 • 4-di(p-methylbenzylidene)sorbitol
1 • 3,2 • 4-di(p-hexylbenzylidene)sorbitol
1 • 3,2 • 4-di(l-naphthalenecarbylidene)sorbitol
1 • 3,2 • 4-di(phenylacetylidene)sorbitol
1 • 3,2 • 4-di(methylbenzyliden)sorbitol
1 • 3,2 • 4-di(ethylbenzylidene)sorbitol
1 • 3,2 • 4-di(propylbenzyledene)sorbitol
1 • 3,2 • 4-di(methoxybenzylidene)sorbitol
1 • 3,2 • 4-di(ethoxybenzylidene)sorbitol
1 • 3,2 • 4-di(P-methylbenzylidene)sorbitol
1 • 3,2 • 4-di(P-chlorobenzylidene)sorbitol
1 • 3,2 • 4-di(P-methoxybenzylidene)sorbitol
1 • 3,2 • 4-di(alkylbenzylidene)sorbitol and
1 • 3,2 • 4-di(methlylbenzylidene)sorbitol
aluminumbenzoate.

A suitable blending amount of the organic nucleating agent is 0.005 to 5 wt. %, preferably 0.01 to 3 wt. %, more preferably 0.03 to 2 wt. %, the most preferably 0.05 to 1 wt. %. A suitable blending amount of the sorbitol organic nucleating agent is 0.01 to 5 wt. %, preferably 0.01 to 3 wt. %, more preferably 0.03 to 2 wt. %, the most preferably 0.05 to 1 wt. %. When the blending amount is less than 0.01 wt. %, the blending effect is insufficient. When the blending amount exceeds 5 wt. %, the blending effect increased by the excess amount is little. Moreover, bleeding out occurs, and deposition at the mold outlet of a film molding machine occurs to generate streak trouble.

The organic nucleating agent, particularly sorbitol compounds, is bulky, having a bulk specific gravity of 0.1 ±

0.02, and tends to fly away, and accordingly, it is preferable to combine a fatty acid metal salt because of improving dispersibility, blending effect and decreasing bleeding out, as well as preventing fly away. Preferable fatty acid metal salts have number of carbon atoms of not less than 8. A suitable content of the fatty acid metal salt in the molded article is 0.01 to 5 wt. %, preferably 0.03 to 3 wt. %, particularly preferably 0.05 to 1.5 wt. %. The fatty acid metal salt also improves the dipersibility of light-shielding material and moldability. Moreover, photographic properties are improved by rendering halides harmless by neutralization which adversely affect photographic properties.

The inorganic nucleaging agent includes an alkali metal hydroxide, such as lithium hydroxide, sodium hydroxide and potassium hydroxide, an alkali metal oxide, such as sodium oxide, an alkali metal carbonate, such as lithium carbonate, sodium carbonate, potassium carbonate, sodium hydrogencarbonate and potassium hydrogencarbonate, an alkaline earth hydroxide, such as calcium hydroxide, magnesium hydroxide and barium hydroxide, an alkaline earth oxide, such as calcium oxide, and an alkaline earth carbonate, such as calcium carbonate.

The nucleating agent is not limited to the above compounds, and any known nucleating agent may be employed. Moreover, two or more nucleating agents may be used simultaneously. A suitable blending amount of inorganic nucleating agent is 0.01 to 10 wt. %, preferably 0.03 to 7 wt. %, particularly preferably 0.05 to 5 wt. %.

Preferable nucleating agents are organic nucleating agent of dibenzylidenesorbitol compounds, and the di-substituted benzylidenesorbitol compositions described below are particularly preferable for the polyolefin resins, preferably homopolypropylene resin, propylene-α-olefin block copolymer resin, propylene-α-olefin random copolymer resin, homopolyethylene resin having a density of not less than 0.910 g/cm$^3$ and ethylene-α-olefin copolymer resin having a density of not less than 0.870 g/cm$^3$, which belong to the crystalline resin, in view of the improvement in Young's modulus, physical strength, rigidity and film molding speed, the decrease of molding troubles, and the improvement in foreign odor and bleeding out which are the defects of conventional organic nucleating agent.

The di-substituted benzylidenesorbitol composition contains solid powder of the dibenzylidenesorbitol derivative represented by the following general formula and the following higher fatty acid as the essential components, And the surface of the solid powder of the dibenzylidenesorbitol derivative is coated with the higher fatty acid.

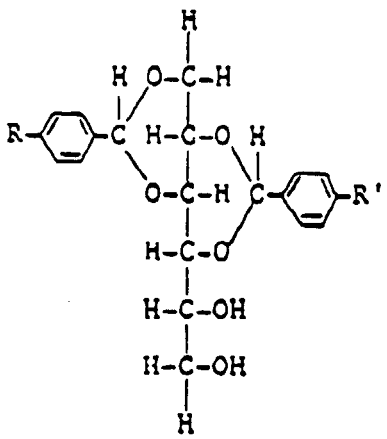

In the formula, R and R' independently represent an atom or a group selected from chlorine atom, methyl group and ethyl group, preferably chlorine atom or methyl group.

$$CH_3(CH_2)_n\ COOH$$

In the formula, n represents a number of 14 to 30, preferably 18 to 27, particularly preferably 20 to 25. Preferable dibenzylidenesorbitol derivatives of the above general formula are 1 • 3,2 • 4-di(p-methylbenzylidene)sorbitol, 1 • 3,2 • 4-di(p-ethylbenzylidene)sorbitol, 1 • 3-p-methylbenzylidene-2 • 4-p-chlorobenzylidenesorbitol, 1 • 3-p-methylbenzylidene-2 • 4-p-ethylenzylidenesorbitol, 1 • 3-p-chlorobenzylidene-2 • 4-p-methylbenzylidensorbitol and the like. Particularly preferable dibenzylidenesorbitol derivatives are 1 • 3,2 • 4-di(p-methylbenzylidene)sorbitol, 1 • 3-p-methylbenzylidene-2 • 4-p-chlorobenzylidene sorbitol and 1 • 3-p-chlorobenzylidene-2 • 4-p-methylbenzyidenesorbitol.

Preferable higher fatty acids are behenic acid, stearic acid and palmitic acid. Behenic acid is the most preferable, and stearic acid is in the second place.

Representative preferable examples for the packaging material containing organic nucleating agent for photographic photosensitive materials are described below:

(1) Packaging materials containing 0.01 to 5 wt. %, preferably 0.03 to 3 wt. % of the organic nucleating agent composed of a diacetal composition which is a mixture of the compounds represented by the following general formula:

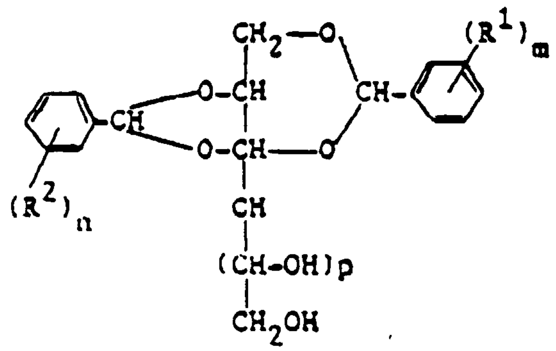

In the formula, p represents 0 or 1.

The mixture satisfies the equation of $Z=A/(A+B+C)$ wherein $0.3 \leqq Z \leqq 0.8$ (weight base).

A represents a compound of the general formula wherein $R^1$ is methyl group $R^2$ is hydrogen atom, and m is 2 or 3 and/or a compound of the general formula wherein $R^1$ is hydrogen atom, $R^2$ is methyl group and n is 2 or 3.

B represents a compound of the general formula wherein $R^1$ and $R^2$ are hydrogen atom.

C represents a compound of the general formula wherein $R^1$ and $R^2$ are methyl group, and m and n are the same number of 2 or 3.

(2) Packaging material containing 0.01 to 5 wt. % of the organic nucleating agent composed of a sorbitol derivative represented by the following general formula:

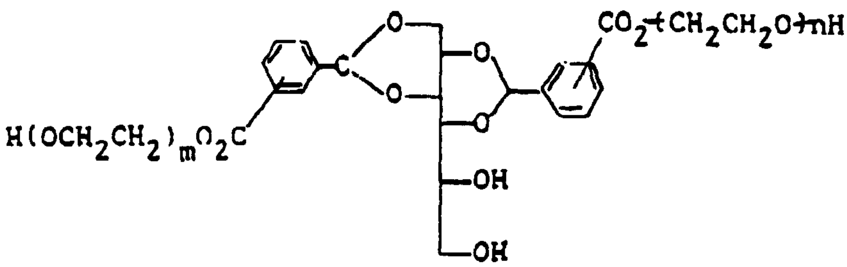

In the formula, m and n are identical with or different from each other and represent an integral, number of 1-10.

(3) Packaging materials containing 0.01 to 5 wt. % of the organic nucleating agent composed of a monoacetal. represented by the general formula [A] or [B] or a mixture tehreof

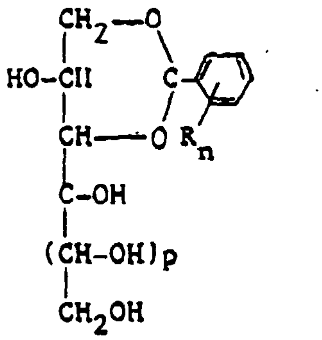

[A]

In the formula, R represents $-COOR^1$ or $-CONR^2R^3$. $R^1$ represents alcohol residue, and $R^2$ and $R^3$ are identical with or different from each other, and represent hydrogen atom or amine residue. n represents 1-3, and p is 0 or 1.

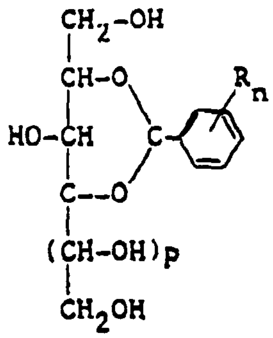

[B]

In the formula, R, n and p are as explained in the above general formula [A].

(4) Packaging materials containing 0.01 to 5 wt. % of the organic nucleating agent composed of a sorbitol derivative represented by the following general formula

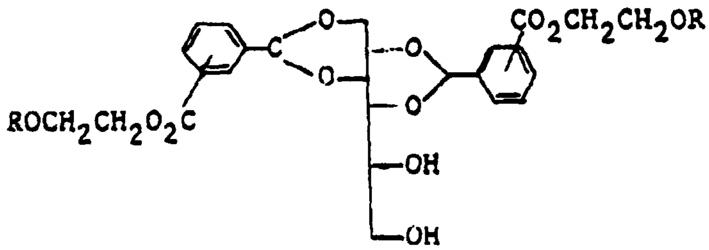

In the above formula, R represents alkyl group having a number of carbon atoms of 1-4.

(5) Packaging materials containing 0.01 to 5 wt. % in total at at least one of 1,3-benzylidene-2,4-para-methylbenzylidene sorbitol, 1,3-para-methylbenzylidene-2,4-benzylidene sorbitol.

(6) Packaging materials containing 0.01 to 5 wt. % of the benzylidene sorbitol derivative composition composed of 100 parts by weight of a benzylidene sorbitol derivative represented by the general formula [I] and 0.01 to 10 parts by weight of a phenol antioxidant represented by the general formule II

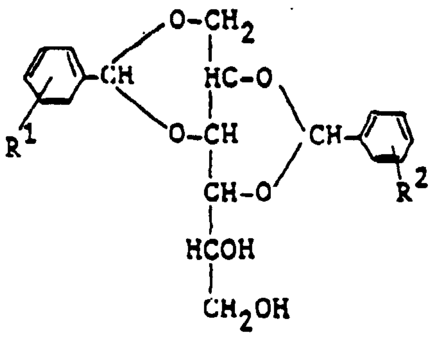

[I]

In the formula, $R^1$ and $R^2$ are identical with or different from each other, and represent hydrogen atom, halogen atom, alkyl or alkoxyl group having a number of carbon atoms of 1-8 or hydroxyl group.

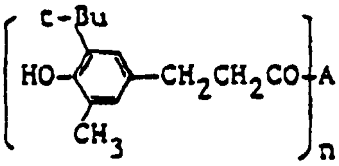

[II]

In the formula, A represents alcohol residue of 1-4 valence, and n represents an integral number of 1-4.

(7) Packaging materials containing 0.01 to 5 wt. % of the organic nucleating agent composition composed of a dibenzylidene sorbitol compound containing 0.001 to 10 wt. % of an alkaline compound and/or radical inhibitor.

(8) Packaging materials composed of 100 parts by weight of crystallin resin, 0.02 to 5 parts by weight of organic carboxylic acid amine of divalent or more aliphatic amine. 0.01 to 5 parts by weight of an organic phosphate ester compound represented by the following general formula or an ammonium salt thereof, and 0.01 to 5 parts by weight of a metal salt of organic carboxylic acid having a number of carbon atoms of 7 or more.

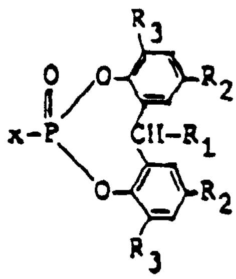

In the formula, $R_1$ represents hydrogen atom or an alkyl group having a number of carbon atoms of 1-4, $R_2$ and $R_3$ represents hydrogen atom, an alkyl, cycloalkyl, aryl or aralkyl group having a number of carbon atoms of 1-12, respectively, and X represents -OH or $-O^-NH_4^+$,

(9) Packaging materials composed of 100 parts by weight of crystalline resin and 0.01 to 5 parts by weight of an eutectic crystal compound of a carboxylic acid having a number of carbon atoms of 3 or more and a nitrogen-containing heterocyclic compound having amino group or hydroxyl group at α-position.

(10) Packaging materials composed of 100 parts by weight of crystalline resin and 0.01 to 5 wt. % of an alicyclic carboxylic amide compound of divalent or more aliphatic amine.

The particle size of the solid powder of the dibenzylidene sorbitol derivative is not particularly limited, but a particle size distribution of 0.49 to 0.149 mm (30 to 100 mesh) is preferred.

Preferably, the organic nucleating agent composition contains 95 to 50 parts by weight, preferably 90 to 50 parts by weight, of the dibenzylidenesorbitol and 5 to 50 parts by weight, preferably 10 to 50 parts by weight, of the higher fatty acid so that the total of both components is 100 parts by weight.

The di-substituted dibenzylidenesorbitol can be prepared by adding the solid powder of the dibenzylidenesorbitol derivative to an aqueous emulsion containing the higher fatty acid in the above ratio, stirring to form a coating layer of the higher fatty acid on the surface of the solid powder of the dibenzylidenesorbitol derivative, filtering out the dibenzylidenesorbitol derivative powder coated with the higher fatty acid, washing followed by drying. The above aqueous emulsion of the higher fatty acid is prepared by dispersing an organic solvent solution of the higher fatty acid in a concentration of 5 to 50 wt. %, preferably 10 to 50 wt. % into water together with a small amount, such as 1 to 10 parts by weight, preferably 2 to 5 parts by weight, of surfactant. The presence of the higher fatty acid coating formed on the surface of the solid powder of the dibenzylidene sorbitol derivative can be confirmed by coloring the coating using a dye and then observing.

The polyolefin resin, to which the di-substituted benzylidenesorbitol composition is blended as an additive in order to improve physical strength and to decrease bleeding out and odor, includes homopolymers and copolymers of aliphatic monoolefin having a number of carbon atoms of 2 to 6, such as homopolypropylene resin, low density homopolyethylene resin, high density homopolyethylene resin, linear polyethylene (ethylene-α-olefin copolymer) resin and ethylene-propylene copolymer resin having a number average molecular weight of 10,000 to 1,000,000, preferably 15,000 to 800,000, more preferably 20,000 to 600,000, particularly preferably 30,000 to 400,000. The blending effects of the organic nucleating agent are especially exercised on the polyolefin resin having a high crystallinity, not less than 50 %, preferably nor less than 70 %, more preferably not lass than 80 %, particularly preferably not less than 90 %. A suitable molecular weight distribution (weight average molecular weight/number average molecular weight) is 2 to 20, preferably 3 to 15, more preferably 3.5 to 12, particularly preferably 4 to 8, determined by the molecular weight obtained by the GPC method.

A suitable blending amount of the di-substituted benzylidenesorbitol component is 0.005 to 5 parts by weight, preferably 0.01 to 3 parts by weight, per 100 parts by weight of the polyolefin resin.

The di-substituted benzylidenesorbitol composition can be blended into the polyolefin resin by an arbitrary known blending means, and the blend prepared in a high concentration can be used as a masterbatch resin.

In the di-substituted benzylidenesorbitol composition, it is important that the surface of the solid particles of the dibenzylidenesorbitol derivative is coated with the higher fatty acid, and the aforementioned effects cannot be obtained by mere blending of the dibenzylidene sorbitol derivative and the higher fatty acid.

Moreover, in order to obtain the aforementioned effects, a heat history of not less than 180°C, preferably not less than 190°C, particularly preferably not less than 200°C is necessary. The heat history is sufficient by once. For example, the polyolefin resin composition is blended with 0.01 to 2 wt. % of the above di-substituted benzylidenesorbitol composition, and pelletized with heating at a temperature not less than 180°C, preferably not less than 190°C, particularly preferably not less than 200°C. The pellets are used for molding a light-shielding polyolefin resin film or the like. Even when the molding resin temperature is less than 180°C, the aforementioned effects are obtained, by rendering the molding resin temperature not less than 180°C (i.e. twice heat history of not less than 180°C), the molded light-shielding polyolefin resin film is very excellent in physical properties and rigidity, has a high surface gloss and rare occurrence of wrinkling and streaks.

In order to exhibit the blending effect of nucleating agent at the maximum, it is preferable to apply to the polyethylene resin having a molecular weight distribution (weight average molecular weight/number average molecular weight) of 1.5 to 12, preferably 2 to 10, particularly preferably 2.5 to 7.

The di-substituted benzylidenesorbitol composition exhibits various advantages compared with conventional organic nucleating agent, such as not degrading various properties, such as physical strength, bleeding out problem and rigidity, but occasionally improving the properties, being excellent in odorless property, resistance to wrinkling and streaks, the improvement in film moldability, film forming speed and the decrease of molding trouble, by blending the polyolefin resin composition. That is, light-shielding molded articles for photographic photosensitive materials excellent in physical strength, rare bleeding out, odorless property, film moldability and wear resistance can be provided by blending the polyolefin resin composition of the invention with the di-substituted benzylidenesorbitol composition.

Although the reason why the di-substituted benzylidenesorbitol composition exhibits the above excellent effects is not clear, it can be considered that benzaldehyde, which is a raw material of conventional dibenzylidenesorbitol, and benzaldehyde derivatives such a p-substituted benzaldehyde, which are a raw material of the dibenzylidene sorbitol deriative used in the invention, have odor, and a trace amount thereof unavoidably remains in dibenzylidenesorbitol or its derivative after purification to cause foreign odor of the light-shielding polyolefin resin, and that a small amount of dibenzylidenesorbitol or its derivative is decomposed during molding the light-shielding polyoefin resin film to cause foreign odor. By satisfying the requirement of using the solid particles of the dibenzylidenesorbitol derivative

of the aforementioned formula and coating them with the higher fatty acid of the aforementioned formula, the di-substituted benzylidenesorbitol composition exhibits the effect of sharply decreasing the foreign odor of the molded articles of the invention and the effect of improving the aforementioned various properties, such as rigidity and physical strength.

Various organic nucleating agent may be used as a nucleating agent or a combination of two or more organic nucleating agents. The surface of organic and/or inorganic nucleating agents may be coated with various lubricants, such as fatty acid, fatty acid compound or silicone, coupling agent, plasticizer, dispersing agent such as surfactant or wetting agent.

A suitable blending amount of nucleating agent is 0.005 to 5 wt. %, preferably 0.01 to 3 wt. %, more preferably 0.03 to 2 wt. %, particularly preferably 0.05 to 1 wt. % in total. When the blending amount is less than 0.005 wt. %, the blending effects is insufficient. When the blending amount exceeds 5 wt. %, the affect of the excess amount of the nucleating agent is minor. According to the kind of the nucleating agent, it adversely affects photographic photosensitive materials, generates noxious odor, adheres to mold, bleeds out, decreases dropping strength, or the like.

As the method of blending the nucleating agent, there are the compound method, the dry blending method, the masterbatch method, and the like, and the masterbatch method is preferred. It is preferable to blend at the time of producing coloring masterbatch, in view of cost and workability. Since the nucleating agent is bulky and tends to fly away, to blend a small amout of dispersing agent or wetting agent is preferred. Suitable dispering agents include various lubricants, various low molecular weight polyolefin resins having a number average molecular weight of 500 to 10,000, various waxes, various carboxylic acid anhydrides, various higher fatty acids, etc., and lubricants such as various fatty acid metal salts, various silicones and oleic amide are particularly preferred. As the wetting agent, plasticizers such as DOP and DHP can be used.

It is also preferred to prevent the bleeding out by coating or blending a fatty acid or a fatty acid compound, such as a higher fatty acid, a fatty acid amide or a fatty acid metal salt onto or with the organic nucleating agent. Furthermore, the blending effect of the nucleating agent is improved by using in a form of pellets formed by blending with a polyolefin resin having a heat history at not less than 180°C, preferably not less than 190°C, particularly preferably not less than 200°C. By blending these additives, physical strength is improved, white powder generation caused by abrasion can be decreased by increasing rigidity, and white powder generation caused by crystallization or bleeding out of the organic nucleating agent can also be decreased. Moreover, uncomfortable odor of the organic nucleating agent is prevented, and antistatic ability and antiblocking ability are improved. In this case, it is preferable to blend at least one of the aforementioned various antioxidant radical scavenger, and oxidation inhibition synergyst, such as citric acid and phosphoric acid, in order to prevent the degradation, oxidative decomposition and coloring of the above various dispersing agent and various thermoplastic resin.

By blending nucleating agent, various effects can be obtained. For example, when 0.1 part by weight of a nucleating agent of p-t-butylbenzoate is added to 100 parts by weight of a crystalline resin of propylene-ethylene random copolymer resin, haze can be lowered from 40 % to 21 %. By blending 0.2 part by weight, haze can further be lowered to 12 %. Tensile yielding stress can be improved, for example from 380 kg/cm$^2$ to 420 kg/cm$^2$ by blending 0.1 part by weight. However, even when a more amount is added, the tensile yielding stress is not further improved. Bending elastic modulus can be improved, for example, by 500 kg/cm$^2$ to 600 kg/cm$^2$ by blending 0.1 part by weight, but it does not further improved by blending a higher amount.

In order to exhibit the blending effect sufficiently, the resin temperature of the crystalline resin, preferably polyolefin resin, is made nor less than 170°C, preferably not less than 185°C, particularly preferably not less than 195°C at the time of kneading (imparting heat history). It is preferable to add the heat history of nor less than 170°C once or more, preferably twice or more (at the time of pelletizing and molding).

It is preferable to add the heat history together with at least one kind of antioxidant and/or radical scavenger.

When the aforementioned organic nucleating agent or inorganic nucleating agent is combined with various fatty acid metal salt, various effects are exercised, such as the improvement in dispersibility, the neutralization of halogen compounds which adversely affect photographic properties, the increase of blending effects and the decrease of bleeding out. A suitable blending amount of the fatty acid metal salt (preferably the salt of the fatty acid of $C_8$ or more) is 0.01 to 2 wt. %, preferably 0.03 to 1 wt. %, particularly preferably 0.05 to 0.5 wt. %.

The thermoplastic resin composition used in the invention may be blended with the following plasticizer in order to improve uniform dispersion of the nucleating agent and the light-shielding material.

(1) Phthalic acid plasticizer

dibutyl phthalate, diheptyl phthalate, dioctyl phthalate, diisodecyl phthalate, butyl lauryl phthalate, ditridecyl phthalate, butyl benzyl phthalate or butyl phthalyl butyl glycolate,

(2) Phosphoric acid plasticizer

tricresyl phosphate or trioctyl phosphate.

(3) Fatty acid plasticizer

tri-n-butyl citrate, dioctyl adipate, dioctyl azelate, dioctyl sebacate or methyl acetyl ricinoleate,

(4) Epoxy plasticizer

alkyl epoxy stearate or 4,5-epoxytetrahydrodiisodecyl phthalate.

(5) Other plasticizer

chlorinated paraffin, polyester or sucrose octacetate.

A suitable blending amount of the plasticizer is 0.01 to 10 wt. %, preferably 0.05 to 7 wt. %, particularly preferably 0.1 to 5 wt. %. When the blending amount is less than 0.01 wt. %, the blending effects of the improvement in the uniform dispersibility of light-shielding material and in the blocking adhesion is insufficient. When the blending amount exceeds 10 wt. %, screw slip occurs in an extruder resulting in the variation of ejected resin amount.

The thermoplastic resin composition may be blended with deodorant.

As the deodorant, there are organic carboxylic acids, mixtures of organic carboxylic acid and zinc compound, mixtures of organic carboxylic acid, zinc compound and aluminum compound.

The organic carboxylic acids include aliphatic polycarboxylic acids, aromatic polycarboxylic acids, acidic polyester compounds which are reaction product of the aliphatic or aromatic polycarboxylic acid and polyol compound and has a carboxyl group at terminal(s). As the aliphatic polycarboxylic acids, there are various di-or tri-carboxylic acids, such as oxalic acid, malonic acid, succinic acid, adipic acid, fumaric acid, methylfumaric acid, maleic acid, methylmaleic acid, itaconic acid, acetylenic acid, malic acid, methylmalic acid, citric acid, isocitric acid, mesaconic acid, citraconic acid and their salts, and citric acid and fumaric acid and their salts are particularly preferred. As the aromatic polycarboxylic acids, there are phthalic acid, terephthalic acid, isophthalic acid, trimellitic acid pyromellitic acid, benzenehexatricarboxylic acid, naphthalene dicarboxylic acid, naphthalene tricarboxylic acid, naphthalene tetracarboxylic acid, azobenzene tetracarboxylic acid, and their anhydrides, and benzene tricarboxylic acid and trimellitic acid are particularly preferred. As the acidic polyester compound having a carboxylic group at a terminal, there are polyesters having a terminal carboxyl group produced by the reaction of polycarboxylic acid such as phthalic acid with polyol such as ethylene glycol or diethylene glycol or acidic cellulose derivatives modified with polycarboxylic acid.

The zinc compound combined with the organic carboxylic acid includes zinc oxide, inorganic zinc salts, such as zinc chloride, zinc sulfate, zinc phosphate and zinc carbonate, and organic zinc salts, such as zinc citrate and zinc fumarate. A suitable mixing ratio of organic carboxylic acid : zinc coumpound is 1 : 0.1-3 by weight ratio.

The aluminum compound combined with the organic carboxylic acid and the zinc compound includes aluminum sulfate and potassium alum, and a suitable mixing ratio of organic carboxylic acid ; zinc compound ; aluminum compound is 1 : 0.1 : 0.1 to 1 : 3 : 3 by weight ratio.

As the other deodorants, there are ferrous compound and L-ascorbic acid, ferrous compound, L-ascorbic acid and alum, metal phthalocyanine, activated carbon fiber, metal porphyrins, aliphatic polycarboxylic acids (tricarboxylic acid, citric acid, oxalic acid, malonic acid, malic acid, succinic acid, etc.), compound based on an organic acid ("Daimushe", Dainichi Seika), activated carbon, natural organic materials extracted from plants (flavanols, organic polymers), polyphenol, cellulose acetate impregnated with glyoxal, oxycarboxylic acid compound and ferrous salt, oxycarboxylic acid having two or more intramolecular carboxyl groups and ferrous salt, L-ascorbic acid and ferrous salt, oxycarboxylic acid compound, L-ascorbic acid and ferrous salt, ascorbic acid, humic acid and iron salt, iron and vitamin C, iron compound, iron salt of inorganic acid, iron salt of organic acid, blend of iron oxide citrate, silicic acid, alumnum, calcium and potassium, cristobalite, alumina soldium silicate (zeolite), sulfates, chlorides, nitrates and acetates of Cu, Zn, Al, Fe, Ni, Sn, Pb, Ti, Mn, Co and Ag, and combinations of them.

A suitable blending amont of the deodorant is 0.01 to 30 wt. %, preferably 0.05 to 20 wt. %, particularly preferably 0.1 to 10 wt. %.

The following additives may be added to the resin composition used in the invention.

(1) Plasticizer; phthalic acid esters, glycol ester, fatty acid esters or phosphoric acid esters.
(2) Stabilizer; lead compounds, cadmium compounds, zinc compounds, alkaline earth metal compounds or organic tin compounds.
(3) Flame retardant; phosphoric acid esters, phosphoric acid ester halides, halides, inorganic materials or polyols containing phosphor.

(4) Filler; alumina, kaolin, clay, zeolite, calcium carbonate, mica, talc, titanium oxide or silica.
(5) Reinforcing agent; glass roving, metallic fiber, glass fiber, glass milled fiber or carbon fiber.
(6) Blowing agent; inorganic blowing agents (ammonium carbonate, sodium hydrogen carbonate) or organic blowing agents (nitroso compounds, azo compounds).
(7) Vulcanizing agent; vulcanization accelerator or acceleration assistant.
(8) Deterioration preventing agent, ultraviolet absorber, metal deactivator or peroxide decomposing agent.
(9) Coupling agent; silane compounds, titanium compounds, chromium compounds or aluminum compounds.
(10) Various thermoplastic resins, polyolefin, elastomers, synthetic rubbers.

As the preparation method of the thermoplastic resin composition, the masterbatch method is preferable in terms of uniform dispersion, automation and reduction of blending cost. That is, one or more of the antioxidant, the fatty acid metal salt, the chelating material, the adsorption substance, the light-shielding material, the lubricant, the surfactant, the dripproofing material and the nucleating agent are blended with one or more of the thermoplastic resin, paraffin wax and plasticizer in a high concentration to form masterbatch, and the masterbatch is blended with the thermoplastic resin for dilution into a prescribed concentration, not more than 1/2 of the concentration of the masterbatch to produce the thermoplastic resin. The concentration of the masterbatch is 2 to 50 times, preferably 4 to 25 times that of the object concentration.
By employing the above masterbatch method, various advantages can be obtained, such us reduction of cost, capability of the production of various thermoplstic resin compositions different in the concentration of object material by changing the the blending ratio.
Representative examples to which the packaging material for photographic photosensitive materials of the invention is applicable are shown below.

① Packaging materials for photographic photosensitive materials having a structure (melt coating) of a single layer thermoplastic resin film laminated by extrusion laminating onto a support.
② Packaging materials for photographic photosensitive materials having a structure (melt coating) of a coextruded layer thermoplastic resin film laminated by extrusion laminating onto a support.
③ Packaging materials for photoghraphic photosensitive materials having a structure (film molded article) of a single layer thermoplastic resin film.
④ Packaging materials for photographic photosensitive materials having a structure (film molded article) of a coextruded multilayer thermoplastic resin film.
⑤ Packaging materials for photographic photosensitive materials having a laminated film structure composed of a flexible sheet and a film of ③ and/or ④ laminated through an adhesive layer.
⑥ Injection molding articles (sealed containers, cartridges for photographic film, cartridges, magazines, spools, cores, packs, springs or film units with lens)
⑦ Sheer molding articles, vacuum molding articles using sheet molding articles, assembly containers (corrugated board pads, separators, light-shielding members, impact absorption sheets).
⑧ Blow molding articles (sealed containers for developing agent or fixing agent or magazines)

The packaging materials composed of two or more members among the above ones, such as combinations of a plastic cartridge and a spool molded by resin, containers for photographic film (container body and cap), resin molded articles of film units with lens, resin and molded articles of instant film units, are preferably formed of substantially the same resin, in view of recycling ability, reduction of cost by scale up, decrease of stock of resins and additives.
The packaging material for photographic photosensitive materials of the invention can be molded by T die film molding, inflation film molding, single layer extrusion film molding, multilayer coextrusion film molding, T die sheet molding, injection molding, blow molding or vacuum molding.
The packaging material of the invention may be provided with letters and marks which are required on the functional viewpoint, such as CAS code (camera automatic sensing code), bar code, CI mark, name of goods, instruction, mark for discriminating goods and color for discriminating goods, or with print in order to improve the value as commercial goods. The ink used for printing them can be selected from harmless inks to photosensitive materials among conventional inks for offset printing, inks for gravure printing or UV inks.
Representative synthetic resins used for the inks are vinyl chloride copolymer resins, vinyl-amino resin, alkyd-vinyl resin, oil-free alkyd resin, vinyl chloride-vinyl acetate copolymer resins, nitrocellulose, polyester, polyamide-urethane, polyacrylic resin, rosin-modified maleic acid resin, ethylene-vinyl acetate resin, vinyl ether resin, urethane vinyl acetate resin, vinylchloride-vinylacetate copolymer urethane resin, modified alkyd resin, modified phenol resin, high molecular weight polyester-amino resin, low molecular weight polyester-amino resin, alkali-soluble resins (rosin-modified maleic acid resin, styrene-maleic acid resin, styrene-acrylic acid resin, acrylate ester-acrylic acid resin, methacrylate ester-acrylic acid resin, hydrosol type resins (styrene-maleic acid resin, styrene-acrylic acid resin, α-methylstyrene-acrylic acid resin, acrylate ester-acrylic acid resin, methacrylate ester-acrylic acid resin), emulsion type resins (styrene resin, styrene-acrylate ester resin, acrylate ester copolymer resins, methacylate ester copolymer resins), and the like. As the resins used for UV ink, polymers having acrylic unsaturated groups are, in general, used, and representative examples are polyester/acrylate ester, polyester/urethane resin/acrylate ester, epoxy resin/acrylate ester, pentaerythritol triacrylate, trimethylol propane triacrylate, hexanediol diacrylate, neopentylglycol diacrylate, triethylene glycol diacrylate or hydroxyethyl methacrylate.

Coloring pigments generally known are used for the above inks. The coloring pigments include various pigments disclosed in Japanese Patent KOKAI No. 63-44653, etc., azo pigments, (Azo Lake, Carmine 6B, Red 2B, insoluble azo pigments, Monoazo Yellow (PY-1,-3), Disazo Yellow (PY-12, -13,-14,-17,-83), Pyrazolo Orange (PO-B-34), Vulcan Orange (PO-16), condensed are pigments, Chromophthal Yellow (PY-93, -95), Chromophthal Red (PR-144,-166)), polycyclic pigments (phthalocyanine pigments, Copper Phthalocyanine Blue (PB-15, -15 • 1,-15 • 3), Copper Phthalocyanine Green (PG-7)), dioxane pigments (Dioxane Violet (PV-23)), isoindolinone pigments (Isoindolinone Yellow (PY-109,-110)), durene pigments, perillene, perinone, flavanthrone, thoindigo, lake pigments (Malachite Green, Rhodamine B, Rhodamine G, Victoria Blue B), inorganic pigments, such as oxides (titanium dioxide, red ion oxide), sulfates (precipitated barium sulfate), carbonates (precipitated calcium carbonate), silicates (hydrous silicates, anhydrous silicates), metal powders (aluminum powder, bronze powder, zinc powder), carbon black, lead yellow, Ultramarine blue or Berlin blue. These pigments may be added to the aforementioned resin layers or the like as a light-shielding material. In addition, oil-soluble dyes and disperse dyes are also usable. Other raw materials composing the ink which are optional are various solvent, dispersing agent, wetting agent, antiformer, leveling agent, thickener, stabilizer, crosslinking agent and wax.

It is also preferable to use the above synthetic resins and coloring pigments as paint for coating the molded article for the purpose of the improvement in the commerical value, wear resistance, light-shielding ability or photographic properties.

The packaging material for photographic photosensitive materials of the invention may be coated with various paints as a base coating or a top coating so that the commercial value is improved and prints are looked beautiful and clear. As the resin and pigment for the paints, the above mentioned for ink can be used, and UV paints, melamine-alkyd paints, urethane paints and melamine paints are preferable. The top coating is preferably formed by applying clear lacquer paint, silicone paint, urethane paint or acryl lacquer paint in a thin thickness of 0.1 to 30 μm, preferably 0.3 to 20 μm, particularly prefeably 0.5 to 10 μm.

The packaging material article for photographic photosensitive materials of the invention is applicable to the following photosensitive materials.

Silver halide photographic photosensitive materials: films for printing, color and monochrome photographic printing papers, color and monochrome films, master papers tor printing, DTR (diffusion transfer process) photosensitive materials, films and papers for computerized type-setting system, color and monochrome positive films, color reversal films, microfilms, films for movie, self-developing type photographic photosensitive materials, direct positive films and papers.

Heat developing photosensitive materials: heat developing color photosensitive materials, heat developing monochromatic photosensitive materials, e.g. disclosed in Japanese Patent KOKOKU Nos. 43-4921, 43-4924, "Shashinkogaku-no-Kiso (Fundamentals of Photographic Engineering), Vol. Silver Salt Photograph", pp 553-555, Corona, 1979, "Research Disclosure", pp 9-15 (RD-17029), June, 1978, transfer-type heat developing color photosensitive materials disclosed in Japanese Patent KOKAI Nos. 59-12431, 60-2950, 61-52343, USP 4,584,267.

Photosensitive heatsensitive recording materials: recording materials using photothermography (photosensitive heatsensitive image forming method) disclosed in Japanese Patent KOKAI No. 3-72358.

Diazonium photographic photosensitive materials: 4-morpholinobenzene diazonium microfilms, microfilms, copying film or form plates for printing.

Azide, diazide photographic photosensitive materials: photosensitive materials containing parazidobenzoate, 4,4'-diazidostilbene, etc., such as copying films and form plates for printing.

Quinone diazide photographic photosensitive materials: photosensitive materials containing ortho-quinone diazide compounds or ortho-naphthoquinone diazide compounds, such as benzoquinone-(1,2)-diazido-(2)-4-sulfonic acid phenyl ether, such as form plates for printing, copying films and contact printing film.

Photo polymers: photosensitive materials, form plates for printing, contact printing films or containing vinyl compound monomer.

Polyvinyl cinnamate esters: printing films, photoresists for IC.

In order to keep photographic properties of the above photographic photosensitive materials in good conditions for a long period (wore than 6 months), it is preferable that photographic photosensitive materials are packaged in a sealed package using the packaging material of the invention wherein the packaging material has a moisture permeability (measured under the conditions B of JIS Z 0208) of not more than 10 $g/m^2 \cdot 24$ hours, preferably not more than 5 $g/m^2 \cdot 24$ hours, particularly preferably not more than 2 $g/m^2 \cdot 24$ hours and an oxygen permeability of not more than 50 $cc/m^2 \cdot 24$ hours • 1 atm • 20°C, preferably 35 $cc/m^2 \cdot 24$ hours • 1 atm • 20°C, particularly preferably not more than 20 $cc/m^2 \cdot 24$ hours • 1 atm • 20°C.

Moreover, the packaging material of the invention is also applicable to various photosensitive materials degraded or denatured by light, oxygen, sulfur dioxide gas or the like, such as foods including peanuts with butter, margarine, snacks, relishes, cakes, teas and lavers, medicines including powder and granular medicines placed in a bag for stomach and bowels and for cold, dyes, pigments, photographic developing agent, photographic fixing agent and toners.

In the package for photographic photosensitive materials of the invention, photographic photosensitive materials are packaged in sealed conditions using the aforementioned packaging material with a moisture permeability (measured under the conditions B of JIS Z 0208) of not more then 10 $g/m^2 \cdot 24$ hours and an oxygen permeability (ASTM D 3985) of not more than 50 $cc/m^2 \cdot 24$ hours • 1 atm • 20°C. When the moisture permeability exceeds 10 $g/m^2 \cdot 24$ hours, photographic properties of photographic photosensitive materials containing photosensitizing dye and many additives which degrade by moisture cannot be kept for a long period (nor less than 6 months). Moreover, since photographic photosensitive materials contain a gelatin layer which induces blocking by obsorbing moisture at least on obverse side or reverse side of the support, blocking is liable to occur. When the oxygen permability exceeds 50 $cc/m^2 \cdot 24$ hours • 1 atm • 20°C, additives in the emulsion layer of photographic photosensitive materials which are liable to be oxidized, such as photosensitizing dye, coupler and the like, are deteriorated to degrade photographic properties. Particularly, it is serious for color photographic photosensitive materials requiring color balance, such as negative film, positive film, printing paper, reversal film and instant film.

In the packaging material for photographic photosensitive materials of the invention, even when a substance adversely affecting photographic properties is contained, the antioxidant, fatty acid metal salt, chelating material or absorption substance is rendered harmless so that the adverse affect does not occur. Accordingly to the invention, thermoplastic resin and/or thermoplastic resin compositions containing additives which adversely affect photographic photosensitive materials can be used to widen the selection range of thermoplastic resins, and cheap thermoplastic resin compositions capable of producing in any area of the world can be used as the packaging material for photographic photosensitive materials.

Several embodiments of the packaging material for photographic photosensitive materials of the invention are illustrated in Figures 1 through 4.

The packaging material of the photographic photosensitive materials shown in Figure 1 is a light-shielding hag and the light-shielding bag 1 is formed into a bag by heat-sealing of one of the openings of a light-shielding inflation film formed by inflation film forming using the thermoplastic resin composition used in the invention.

The packaging material of the photographic photosensitive materials illustrated in Figure 2 is a spool for a photographic film and the spool 2 for a photographic film formed by injection molding using the plastic resin composition used in the invention.

The packaging material for photographic photosensitive materials illustrated in Figure 3 is a container for a photographic film cartridge. The container 3 for a photographic film cartridge is composed of a cap 4 and a comtainer body 5, and these cap 4 and container body 5 are formed by injection molding using the thermoplastic resin composition used in the invention.

The packaging material for photographic photosensitive materials shown in Figure 4 is a container for a photographic film. In the container 6 for a photographic film, a cap / and a container body 8 are integrally formed by injection molding using the thermoplastic resin composition used in the invention.

Subsequently, several embodiments of the package using the packaging material for photographic photosensitive materials of the invention are illustrated in Figures 5 through 9.

The package illustrated in Figure 5 is a film with lens. This film with lens 9 is composed of a front case 10 and a back case 11, as the packaging material for photographic photosensitive materials, and photographic film 12. These cases 10,11 are formed by injection molding using the thermoplastic resin composition used in the invention. It is preferable that the spool on which the photographic film is wound is formed by injection molding using the thermoplastic resin composition used in the invention, in view of recycle, a decrease of resin cost by scale up, a decrease of storing space.

The package illustrated in Figure 6 is a photographic film cartridge. This photographic film cartridge 13 is composed of an upper case 14 and a lower case 15 as the packaging material for photographic photosensitive materials and a spool 16 as the packaging material for photographic photosensitive materials. These cases 14,15 and spool 16 are formed by injection molding using the thermoplastic resin composition used in the invention.

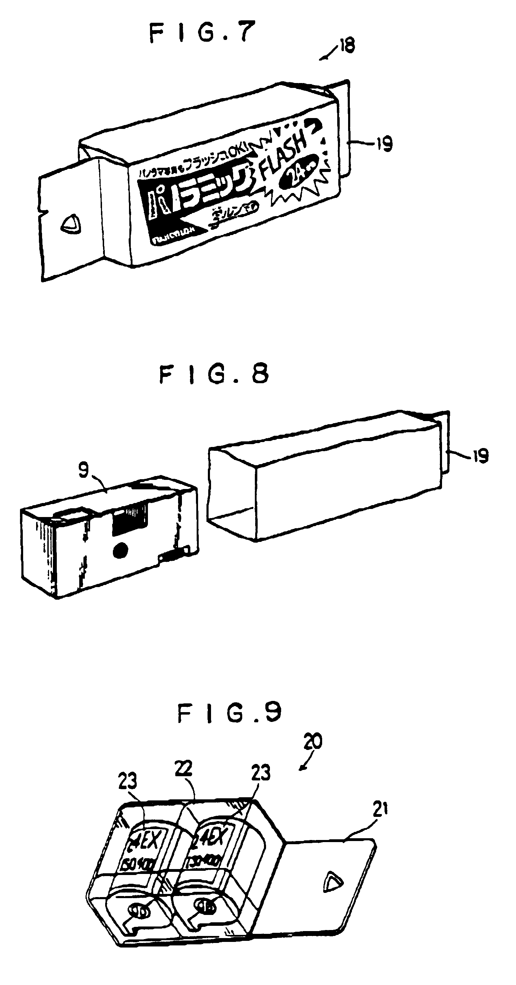

The package illustrated in Figure 7 is a package of a film unit with lens. The package 18 of a film unit with lens is composed of a packaging bag 19 and aforementioned film unit with lens 9 and the package 19 is formed of a multilayer laminated film using the thermoplastic resin composition used in the invention. The package of a film unit with lens

is prepared, as shown in Figure 8, by putting a film unit with lens 9 into a packaging bag 19, and then heat-sealing packaging bag 19.

The package illustrated in figure 9 is an assembly package of 35 mm photographic films each in a cartridge. In this 35 mm photographic film in a cartridge assembly package 20, a transparent plastic case 22 of which the haze (ASTM D-1003) is not more than 70 %, preferably not more than 50 %, particularly preferably not more than 35 % as the packaging material for photographic photosensitive material is mounted onto the support panel 21. (header mount), and 35 mm photographic films 23 in a cartridge is placed therein.

The present invention will now be described in further detail by way of the following examples, which should not be construed as limiting the scope of the present invention in any way. Unless otherwise indicated, all parts, percents, ratios and the like are by weight.

Example I

The packaging material for photographic photosensitive materials of Example I is a light-shielding bag for photographic photosensitive materials shown in Figure 1.

A light-shielding inflation film 70 μm in thickness was prepared using a polyolefin resin composition composed of 60 wt. % of ethylene-1-octene random copolymer resin (expressed as resin A) having a MI of 2.5 g/10 min. a density of 0.921 g/cm$^3$ a Vicat softening point of 110°C, a crystallinity (X ray diffraction method) of 56 % a melting point of 120°C, a molecular weight distribution of 4.2 which is weight average molecular weight Hw/number average molecular weight Mn determined by using permeation gel chromatography, 10 wt. % of homopolyethylene resin (expressed as resin B) having a MI of 1.1 g/10 min. a density of 0.950 g/cm$^3$ a Vicat softening point of 115°C and a crystallinity of 86 %, 25.17 wt. % of homopolyethylene resin (expressed as resin C) having a MI of 2.4 g/10 min, a density of 0.926 g/cm$^3$, a Vicat softening point of 101°C and a crystallinity (X-ray diffraction) of 62 %, 0.03 wt. % of tetrakis [methylene-3(3 • 5-di-tert-butyl-4-hydroxyphenyl)propionate] methane, 1 wt. % of zinc stearate, 7.5 wt. % of carbon black masterbatch which was prepared by blending 40 wt. % of furnace carbon black having a mean particle diameter of 25 nm (25 mμ) of which the surface was treated with 0.3 wt. % of dimethylpolysiloxane having a viscosity of 100 cm$^2$/s (10000 cm stokes) into the resin C in a high concentration (carbon black concentration of the resin composition in 40 x 0.075 = 3 wt. %), 0.2 wt. % of 1 • 3,2 • 4(methylbenzylidene) sorbitol organic nucleating agent and 0.3 wt. % of sorbitan monostearate ester as dripproofing agent. The bottom of this cylindrical light-shielding inflation film was sealed in a width of 7 mm by heat sealing to prepare the light-shielding bag for photographic photosensitive materials.

Examples II, III

The packaging materials for photographic photosensitive materials of Examples II and III are light-shielding bags shown in Figure 1. The light-shielding bags for photographic photosensitive materials were the same as Example I except that the blending amount of the hindered phenol anti oxidant of Example I was changed from 0.03 to 0.005 wt. % (Example II), or from 0.03 to 10 wt. % (Example III) and the excess or short amount caused by the variation of the hindered phenol antioxidant was adjusted by ethylene-1-octene random copolymer resin.

Comparative Examples I, II

The packaging materials for photographic photosensitive material of Comparative Examples I and II are light-shielding bags shown in Figure 1.

A light-shielding inflation film (Comparative Example I) 70 μm in thickness was prepared using an ethylene-1-octene random copolymer resin composition composed of 92.5 wt. % of the above resin A, 4.5 wt. % of the resin C and 3 wt. % of the furnace carbon black.

A light-shielding inflation film (comparative Example II) 70 μm in thickness was prepared using a low density homopolyethylene resin composition composed of 97 wt. % of the resin C and 3 wt. % of the furnace carbon black.

The cylindrical light-shielding inflation films were sealed in a width of 7 mm by heat sealing to prepare the light-shielding bag for photographic photosensitive materials.

Comparative Examples III-IX

The packaging materials for photographic photosensitive materials of Comparative Examples III-IX are light-shielding bags shown in Figure 1.

Each light-shielding inflation film 70 μm in thickness was prepared using the same polyolefin resin composition as Example I wherein, the blending amount of the hindered phenol antioxidant was changed to 0 wt. % (Comparative Example III) or 0.5 wt. % (Comparative Example IV), the hindered phenol antioxidant was changed to 0.10 wt. % of sulfur-containing antioxidant or dilaurylthiodipropionate (Comparative Example V), the blending amount of zinc stearate was changed from 1 wt. % to 0 wt. % (Comparative Example VI), the furnace carbon black was changed to not surface-treated with dimethylpolysiloxane (Comparative Example VII), the furnace carbon black was changed to not surface-treated with dimethylpolysiloxane and blended in a state of powder (dry blending) (Comparative Example VIII), or using the resin composition composed of the resin A, the resin B, the resin C and the carbon black masterbatch of Example I alone. The excess of short amount caused by the variation of the above component was adjusted by the amount of the resin A so as to the total amount became 100 wt. %.

The cylindrical light-shielding inflation films were sealed in a width of 7 mm by heat sealing to prepare the light-shielding bag for photographic photosensitive materials.

In the above examples and comparative examples, each light-shielding inflation film was molded using a single layer inflation film molding machine with a ring die having a lip clearance of 1.0 mm and a diameter of 100 mm at a blow-up ratio of 1.4.

Various properties of Examples I-III and Comparative Examples I-IX were measured, and shown in Tables 1 and 2.

Table 1

| | Unit | Invention | | | Comparative | | | Test |
|---|---|---|---|---|---|---|---|---|
| | | I | II | III | I | II | III | Method |
| **Resin Composition** | | | | | | | | |
| Resin A | wt.% | 60 | 60.025 | 59.93 | 92.5 | 0 | 60.03 | - |
| Resin B | wt.% | 10 | 10 | 10 | 0 | 0 | 10 | - |
| Resin C | wt.% | 25.17 | 25.17 | 25.17 | 4.5 | 97 | 25.17 | - |
| Hindered Phenol Antioxidant | wt.% | 0.03 | 0.005 | 0.10 | 0 | 0 | 0 | - |
| Sulfur-Contg. Antioxidant* | wt.% | 0 | 0 | 0 | 0 | 0 | 0 | - |
| Zn Stearate | wt.% | 1.0 | 1.0 | 1.0 | 0 | 0 | 1.0 | - |
| Dimethylpolysiloxane | wt.% | 0.3 | 0.3 | 0.3 | 0 | 0 | 0.3 | - |
| Furnace Carbon Black | wt.% | 3.0 | 3.0 | 3.0 | 3.0 | 3.0 | 3.0 | - |
| Organic Nucleating Agent | wt.% | 0.2 | 0.2 | 0.2 | 0 | 0 | 0.2 | - |
| Dripproofing Agent | wt.% | 0.3 | 0.3 | 0.3 | 0 | 0 | 0.3 | - |
| **Properties** | | | | | | | | |
| Antiblocking Ability | - | A | A | A | D | D | A | *1 |
| Photographic Properties | - | A | B | B | D | C | D | *2 |
| Prevention of Ring Die Lip Fouling | - | A | A | A | D | D | B | *3 |
| Prevention of Lump Generation | - | A | A | A | D | C | C | *4 |
| Prevention of Melt Fracture | - | B | B | B | D | B | B | *5 |
| Apperarance of Film Surface | - | B | B | B | D | B | C | *6 |
| Insertion of Photographic Photosensitive Materials | - | B | B | B | D | D | C occurrence of abrasion | *7 |
| Dripproofing Ability | - | B | B | B | E | E | B | *8 |
| Antistatic Ability | - | B | B | B | D | D | B | *9 |

* Dilaurylthiopropionate

Table 2

| | Unit | Comparative | | | | | | Test |
|---|---|---|---|---|---|---|---|---|
| | | IV | V | VI | VII | VIII | IX | Method |
| **Resin Composition** | | | | | | | | |
| Resin A | wt.% | 59.53 | 59.93 | 61 | 60.3 | 60.3 | 61.53 | - |
| Resin B | wt.% | 10 | 10 | 10 | 10 | 10 | 10 | - |
| Resin C | wt.% | 25.17 | 25.17 | 25.17 | 25.17 | 25.17 | 25.17 | - |
| Hindered Phenol Antioxidant | wt.% | 0.5 | 0 | 0.03 | 0.03 | 0.03 | 0 | - |
| Sulfur-Contg. Antioxidant | wt.% | 0 | 0.10 | 0 | 0 | 0 | 0 | - |
| Zn Stearate | wt.% | 1.0 | 1.0 | 0 | 1.0 | 1.0 | 0 | - |
| Dimethylpolysiloxane | wt.% | 0.3 | 0.3 | 0.3 | 0 | 0 | 0.3 | - |
| Furnace Carbon Black | wt.% | 3.0 | 3.0 | 3.0 | 3.0 | 3.0 Powder | 3.0 | - |
| Organic Nucleating Agent | wt.% | 0.2 | 0.2 | 0.2 | 0.2 | 0.2 | 0 | - |
| Dripproofing Agent | wt.% | 0.3 | 0.3 | 0.3 | 0.3 | 0.3 | 0 | - |
| **Properties** | | | | | | | | |
| Antiblocking Ability | - | A | A | B | B | B | B | *1 |
| Photographic Properties | - | E | E-D | D | B | D | D | *2 |
| Prevention of Ring Die Lip Fouling | - | B | B | D | C | C | C | *3 |
| Prevention of Lump Generation | - | A | A | D | D | E | D | *4 |
| Prevention of Melt Fracture | - | B | B | C | C | C | B | *5 |
| Apperarance of Film Surface | - | B | B | C | C | E | C | *6 |
| Insertion of Photographic Photosensitive Materials | - | B | B | B | | E occurrence of abrasion | C | *7 |
| Dripproofing Ability | - | B | B | A | B | B | E | *8 |
| Antistatic Ability | - | B | B | B | B | C | B | *9 |

*Dilaurylthiopropionate

A ... Very excellent B ... Excellent

C ... Practical D ... Having a problem, improvement is necessary

E ... Impractical

Test Method

*1 Antiblocking Ability:

Inflation film was molded, wound up, cut into a length to be used, and then, the bottom was heat-sealed. The property was evaluated by the openability of the light-shielding bag thus prepared.

*2 Photographic Properties:

Color photographic papers were put in each light-shielding bag, sealed, left at 50°C for 1 week under dry conditions, and then dveloped. The property was evaluated by the difference from the measured value of the color photographic paper stocked at 15°C as to the increase of fogging and sensitivity deviation.

*3 Prevention of Ring Die Lip Fouling:

Evaluated by the fouling formed on the lip contacting the outer surface of the light-shielding inflation film at the time of molding the film.

*4 Prevention of Lump Generation:

Evaluated by the generation degree of lumps in each light-shielding inflation film by visual inspection.

*5 Prevention of Melt Fracture:

Evaluated by the generation degree of melt fracture in each light-shielding inflation film by visual inspection.

*6 Appearance of Film Surface:

Evaluated in the total of the flatness, streaks, lumps, uneven gloss of each light-shielding inflation film by visual inspection.

*7 Insertion of Photographic Photosensitive Materials:

Evaluated by the workability of the insertion and taking out of color photographic paper sheets put between paper pads from the light-shielding bag prepared of each light-shielding inflation film.

*8 Dripproofing Ability:

Color photographic paper sheet put between paper pads were put in the light-shielding bag prepared of each light-shielding inflation film, stocked under low temperature conditions at 10 °C for three months, and then handled at room temperature of 25 °C. The property was evaluated by water drops adhered to the outer and inner surface of the light-shielding bag.

*9 Antistatic Ability:

Evaluated by the generation of spark and the degree of shock of static electricity felt by hand at the time of intercting and taking out of color photographic paper sheets put between paper pads from the light-shielding bag prepared of each lighr-shielding inflation film.

Example A

The packaging material for photographic photosensitive materials of Example A is a spool for photographic film shown in Figure 2.

The spool for photographic film was a plastic injection molding article formed of a polystyrene resin composition containing 2.0 wt. % of synthetic rubber, 1.0 wt. % of polydimethylsiloxane having a viscosity of 100 $cm^2/s$ (10,000 centistokes), 1.0 wt. % of silicon oxide, 10 wt. % of carbon masterbatch polystyrene resin containing 5 wt. % of furnace carbon black of which the surface was coated with 0.5 wt. % of magnesium stearate (the carbon black concentration of the resin composition was 0.5 wt. %), 0.05 wt. % of hindered phenol antioxidant of 1 • 3 • 5-trimethyl-2 • 4 • 6-tris(3 • 5-di-tert-4-hydroxybenzyl)benzene and 0.1 wt. % of EDTA chelating agent.

In the spool of Example A, adverse affect upon photographic properties by halogen compounds, free sulfur, cyanogen compounds was removed and the occurrence of molding troubles, such as silver streaks and foaming, was made rare by blending the furnace carbon black of which the surface was treated with magnesium stearate, hindered phenol antioxidant, zinc stearate or magnesium stearate.

Example B

The packaging material for photographic photosensitive materials of Example B is a spool for photographic film shown in Figure 2.

The spool for photographic film was a plastic injection molding article formed of a resin composition of ethylene-1-butane random copolymer resin having a MI of 25 g/10 minutes, a density of 0.956 g/$cm^3$, a molecular weight distribution of 4.6 which is weight average molecular weight Mw/number average molecular weight Mn determined by using gel permeation chromatography and a bending rigidity of 12,000 g/$cm^2$, containing 2 wt. % of inorganic nucleating agent of calcium carbonate and 0.5 wt. % of light-shielding material of furnace carbon black, 0.5 wt. % or magnesium stearate end 0.05 wt. % of oleic amide exercising to coat surfaces and to improve dispersibility, and 0.10 wt. % of vitamin E carbosylate ester as antioxidant.

In general, it is considered that crystalline resin has a great mold shrinkage and is inferior in dimensional accuracy. However, the above spool, using ethylene-1-butene random copolymer resin having a high MI, a high density and a molecular weight distribution of 4.6 and furnace carbon black of which the surface was coated with a substance improving slipping character, was excellent in injection moldability and dimensional accuracy, and could be put to practical use even by using a conventional mold used for non-crystalline resin of polystyrene resin. The spool was superior in hear resistance, wear resistance, Izod impact strength and slipping character to the conventional spool formed of polystyrene by one rank, and particularly suitable for spools for photographic film. Since sulfur crosslinked synthetic rubber was not used, even when it was applied to a high sensitivity photographic film of ISO photographic speed 400, the occurrence of fogging and sensitivity deviation was rare, and photographic properties were excellent.

Comparative Examples C,E and F

The packaging materials for photographic photosensitive materials of Comparative Examples C,E and F are spools for photographic film shown in Figure 2.

Each spool was prepared using the same resin composition as Example A wherein the furnace carbon black was changed to not surface-treated with magnesium stearate (Comparative Example C), the blending amount of the hindered phenol antioxidant was changed from 0.05 to 0 wt. % (Comparative Example E), or using the resin composition composed of 99.5 wt. % of polystyrene resin and 0.5 wt. % of furnace carbon black (Comparative Example F).

Various properties of Examples A-B and Comparative Examples C,E and F were measured, and shown in Table 3 and 4. The evaluations were the same as Tables 1 and 2.

Table 3

| | Unit | Invention A | Invention B | Test Method |
|---|---|---|---|---|
| Main Resin | - | Poly-styrene Resin | Ethylene-1-butene Random Copolymer Resin | |
| Synthetic Rubber Content | wt.% | 2.0 | 0* | - |
| Dimethylpolysiloxane Viscosity | centi stokes | 10000 | -* | - |
| Dimethylpolysiloxane Content | wt.% | 1.0 | -* | - |
| Silicon Oxide Content | wt.% | 1.0 | 0* | - |
| Mg Stearate Content | wt.% | 0.5 | 0.5 | - |
| Hindered Phenol Antioxidant Content | wt.% | 0.05 | 0* | - |
| Carbon Black Kind | - | Furnace | Furnace | - |
| Carbon Black Content | wt.% | 0.5 | 0.5 | - |
| EDTA Chelating Agent Content | wt.% | 0.1 | 0* | - |
| $CaCO_3$ Content | wt.% | 0 | 2.0* | - |
| Oleic Amide Content | wt.% | 0 | 0.05* | - |
| VE Carboxilate Content | wt.% | 0 | 0.1* | - |
| Photographic Properties | - | B | A | *a |
| Prevention of Lump Generation | - | B | B | *b |
| Prevention of Fouling of Metal Surface | - | B | B | *c |
| Winding Torque of Photographic Film | - | A | A | *d |
| Light-Shielding Ability | - | B | A | *e |
| Injection Moldability | - | A | B | *f |
| Izod Impact Strength | - | B | A | *g |

*Indicating that the content is diferent from Example A.

Table 4

| | Unit | Comparative C | Comparative E | Comparative F | Test Method |
|---|---|---|---|---|---|
| Main Resin | - | Poly-styrene Resin | Poly-styrene Resin | Poly-styrene Resin | |
| Synthetic Rubber Content | wt.% | 2.0 | 2.0 | 0* | - |
| Dimethylpolysiloxane Viscosity | centi stokes | 10000 | 10000 | -* | - |
| Dimethylpolysiloxane Content | wt.% | 1.0 | 1.0 | -* | - |
| Silicon Oxide Content | wt.% | 1.0 | 1.0 | 0* | - |
| Mg Stearate Content | wt.% | 0* | 0.5 | 0* | - |
| Hindered Phenol Antioxidant Content | wt.% | 0.05 | 0* | 0* | - |
| Carbon Black Kind | - | Furnace | Furnace | Furnace | - |
| Carbon Black Content | wt.% | 0.5 | 0.5 | 0.5 | - |
| EDTA Chelating Agent Content | wt.% | 0.1 | 0.1 | 0* | - |
| $CaCO_3$ Content | wt.% | 0 | 0 | 0* | - |
| Oleic Amide Content | wt.% | 0 | 0 | 0* | - |
| VE Carboxilate Content | wt.% | 0 | 0 | 0* | - |
| Photographic Properties | - | C | D | E | *a |
| Prevention of Lump Generation | - | D | D | D | *b |
| Prevention of Fouling of Metal Surface | - | D | C | E | *c |
| Winding Torque of Photographic Film | - | B | A | E | *d |
| Light-Shielding Ability | - | B | B | D | *e |
| Injection Moldability | - | C | E Occasionally clogging at gate | E | *f |
| Izod Impact Strength | - | B | B | E | *g |

*Indicating that the content is diferent from Example A.

Test Method

*a Photographic Properties:

35 mm negative clor photographic film of 36 exposures with ISO photographic speed 400 in JIS 125 type was wound around each spool for photographic film, put in a light-shielding cartridge for photographic film made of metal of which the exit of photographic film was provided with Teremp cloth, sealed in a container for photographic film made of plastic and then developed after 1 year. The property was evaluated by the difference from the measured value before stock as to the photographic properties of fogging, sensitivity, tone and color balance. Less differences is better.

*b Prevention of Lump Generation:

Each spool for photographic film was formed by injection molding using a molding machine ("NESTAL") with a semi-hot runner type mold for molding 24 pieces per once, and the degree of lump generation was evaluated by visual inspection.

*c Prevention of Fouling of Mold Surface:

Injection molding was conducted 5000 shots under the above b conditions, and the fouling degree of the mold surface was evaluated by vusial inspection.

*d Winding Torque of Photographic Film:

Using 35 mm negative color photographic film of 36 exposures with ISO photographic speed 400 in JIS 125 type placed in the cartridge similar to *a, load

tension at extending the photographic film was measured by TDM-35 type torque meter (Denshi Kogyo K.K.), and evaluated.

*e Light-Shielding Ability:

Negative color photographic film with ISO photographic speed 400 was put in JIS 125 type photographic film cartridge using each spool for photographic film, exposed to the sunlight of 80,000 luxes for 3 hours, and then developed. The property was evaluated by comparing the degree of fogging with not exposed one.

*f Injection Moldability:

Each spool was molded 5,000 shots similar to *b, and the generation of molding troubles was inspected by visual observation of all molded articles. The property was evaluated by the rate of defectives and molding cycle.

*g Izod Impact Strength:

Measured according to JIS K 7110 at 23 ℃, and evaluated.

Example 1

The packaging material for photographic photosensitive materials of Example 1 is a film unit with lens shown in Figure 5 and a packaging bag of a film unit with lens shown in Figure 7.

The front case made of thermoplastic resin, the back case made of thermoplastic resin and the spool for photographic film in the photographic film cartridge were all injection molding articles formed of the same polystyrene resin composition. The polystyrene resin composition contained 2.5 wt. % of butadiene rubber, 1.5 wt. % of polydimethylsiloxane having a viscosity 130 $cm^2/s$ (13,000 centistokes), 0.6 wt. % of furnace carbon black having a mean particle size of 20 nm (20 mμ) an oil absorption value of 123 g/100 g, a volatile component content of 0.8 % (as to the components which adversely affect photographic photosensitive materials, free sulfur; not more than 0.1 %, formalin compound; not more than 0.05 %, cyanogen compunds; not more than 0.01. %) of which the surface was coated with 1 wt. % of zinc stearate and 0.1 wt. % of vitamin E carboxylate ester, and was excellent in impact strength, wear resistance, light-shielding ability and slipping character.

A 35 mm negative color photographic film 12 of 36 exposures with ISO photographic speed 400 was wound around the spool for photographic film, and put in a cartridge for photographic film made of metal of which the exit of photographic film was provided with a light-shielding Teremp cloth to form light-shielding conditions. The photographic film cartridge was set in the case for photographing composed of the front case 10 and the back case 11 to complete

the film unit with lens 9, and put in a bag made of a laminated film composed of biaxially stretched polyester resin film 12 μm in thickness provided with print on the inside/LDPE resin adhesive layer 15 μm in thickness/aluminum vacuum metallized biaxially stretched nylon resin film composed of biaxially stretched nylon resin film 15 μm in thickness provided with aluminum vacuum deposited membrane 40 nm (400 Å) in thickness/heat sealing layer 35 μm in thickness formed by extrusion coating of a resin mixture of 50 wt. % of ethylene-butene-1 copolymer resin, 40 wt. % of LDPE resin and 10 wt. % of modified resin. The opening was heat-sealed to form a moistureproof gas barrier packaging bag provided with a triangular hole for hanging to display. The package was stocked in a household refrigerator at 15°C for 1 year, and the properties were compared with those before stock. As a result, the fogging was increased from 0.01 to 0.03 in the package of Example 1 which was less than the increase of from 0.02 to 0.07 in the conventional package. Winding torque of photographic film was small due to excellent slipping character of both of the spool and the case, and no troubles occurred such as cut of photographic film through winding (extending) and rewinding and impossibility of winding or rewinding.

Besides, since all of the front case, the back case and the spool were formed of the same polystyrene resin composition, they could be regenerated (recycled) by recovering them after use. Moreover, since the resin composition containing a small amount of substances adversely affecting photographic properties of photographic photosensitive materials was used, the regenerated material still did not affect photographic properties adversely. Because of using the furnace carbon black having special properties of which the surface was coated with polydimethylsiloxane, zinc stearate, and further using viatamin E carboxylate ester antioxidant, various advantages were obtained, such as very small oxidative degradation of resin, excellent dispersibility of carbon black, great light-shielding ability, rare occurrence of lumps, reduction of injection molding pressure, shortening of molding cycle, and the improvement in wear resistance and impact strength. Particularly, dimethylpolysiloxane made polystyrene resin turbid into white and accelerated crosslinking, resulting in the sharp improvement in light-shielding ability, wear resistance and impact strength, the improvement in slipping character greatly and the reduction of injection molding pressure greatly. Vitamin E carboxylate ester made polystyrene resin opaque by coloring yellow to improve light-shielding ability, did not adversely affect photographic photosensitive materials and human body, exercised a great oxidation inhibition effect, decreased the generation of lumps and improved regenerating ability.

Example 2

The packaging material for photographic photosensitive materials of Example 2 is a film unit with lens wherein the photographic film cartridge in the film unit with lens of Example 1 shown in Figure 5 is changed to the photographic film cartridge of Figure 6 made of plastic.

All of the front case and the back case made of thermoplastic resin of the film unit with lens, the lower case and the upper case of the cartridge body made of thermoplastic resin of the photographic film cartridge in the case of the film unit with lens and the spool for photographic film in the photographic film cartridge were formed of the came polystyrene resin composition. The polystyrene resin composition was the same as employed in Example 1. The film unit with lens was packaged in the same packaging bag as Example 1, and stocked in a household refrigerator at 15°C for 1 year, and the same properties as Example 1 were measured and compared.

As a result, the package was superior to the conventional package in various properties. Particularly, the winding torque of photographic film was also better than Example 1. Since the cartridge for photographic film was further formed of the same polystyrene resin composition, the package was excellent in regenerating (recycling) ability, and degradation of injection moldability and physical strength of the regenerated material was small. As a result, the amount of industrial waste can be decreased and is excellent in public pollution.

Example 3

All of the photographic film cartridge made of plastic of Figure 6, and the photographic film cartridge and the spool for photographic film of the photographic film assembly package of Figure 9 were formed of the same polystyrene resin composition which was the same as employed in Example 1.

Using the polystyrene resin composition, the photographic film cartridge made of black polystyrene resin corresponding to Figure 6 and the spool for photographic film made of black polystyrene resin were molded, and a 35 mm negative photographic film for photographing was wound around the spool, put in the cartridge, and a light-shielding package was formed by ultrasonic welding. The winding torque of photographic film was less than one half of conventional, cartridges made of metal or plastic. Delivery torque of leading end of the photographic film was also small, and winding and delivery troubles of photographic film did not occur at all through photographing. It was excellent in wear resistance, processibility (converying ability, etc.), injection moldability (small injection pressure, shortening of molding cycle, sharp decrease of molding troubles, such as short shot and silver streaks), and excellent in uniform dispersibility of carbon black.

The package of the cartridge made of black polystyrene resin was put in a body-cap integrated square transparent. container formed of propylene-ethylene random copolymer resin having a MI of 30 g/10 minutes and a bending elastic modulus of 7,500 g/$cm^2$ containing 1 wt. % of magnesium stearate, 0.05 wt. % of hindered phenol antioxidant, 0.2 wt. % of organic nucleating agent and 0.1 wt. % of fatty amide, sealed, and then a print label was adhered. Then, two containers were packaged by a shrinkable film to form an assembly package in I pieces carted type, as shown in Figure 9. After the assembly package was hanged to display at a shop front for 6 months, the photographic films kept almost the quality of photographic films before displaying and could to be used for photographing. Conventional decorative casket is not necessary, and the package holds reusability to decrease industrial waste resulting in the reduction of cost.

## Claims

1. A packaging material for photographic photosensitive materials which comprises a thermoplastic resin composition containing:

   (i) a substance adversely affecting photographic properties of photographic photosensitive materials,
   (ii) 0.0005 to 0.4 wt. % of phenol antioxidant,
   (iii) 0.001 to 10 wt. % of a fatty acid metal salt,
   (iv) as the light-shielding material, 0.01 to 30 wt. % of carbon black the surface of which is coated with a surface-coating material
   (v) a lubricant, and
   (vi) a thermoplastic resin
   with the proviso that the lubricant is not a fatty acid metal salt.

2. The packaging material of claim 1 wherein the lubricant is 0.01 to 5 wt. % of a silicone lubricant having a viscosity at ordinary temperature of 10 to 1,000 $cm^2$/s (1,000 to 100,000 centistokes).

3. The packaging material of claim 1 which further comprises 0.01 to 3 wt. % of a dibenzylidene sorbitol compound.

4. The packaging material of claim 1 which further comprises 0.1 to 50 wt. % of an adsorption substance which adsorbs or stabilizes through chemical reaction substances adversely affecting photographic properties of photographic photosensitive materials.

5. The packaging material of claim 1 which further comprises 0.01 to 5 wt. % of a chelating material.

6. The packaging material of claim 1, 2 or 3 which further comprises 0.01 to 3 wt. % of a waterproofing substance.

7. The packaging material of claim 1 which further comprises 0.01 to 3 wt.% of a di-substituted benzylidene sorbitol composition containing a solid powder of a dibenzylidene sorbitol derivative represented by the following general formula and the following higher fatty acid as the essential components, and the surface of the solid powder of the dibenzylidene sorbitol derivative is coated with the higher fatty acid:

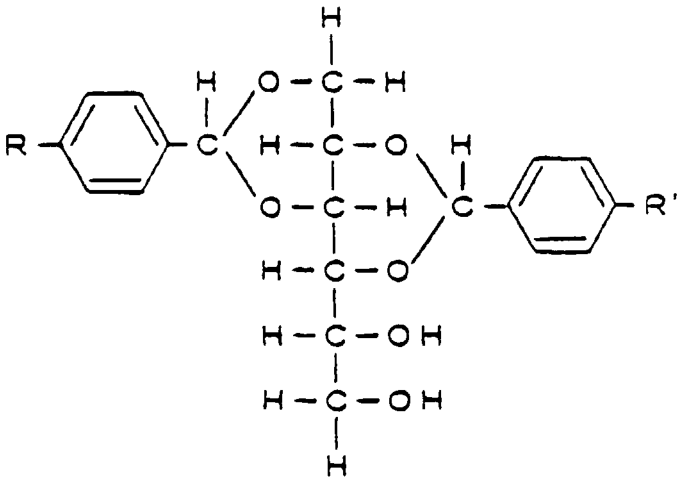

In the formula, R and R' independently represent an atom or a group selected from chlorine atom, methyl group and ethyl group, preferably chlorine atom or methyl group;

$$CH_3(CH_2)_nCOOH$$

in the formula, n represents a number of 14 to 30.

**8.** The packaging material of claim 1 wherein the carbon black has a cyanogen compound content of less than 0.01%.

**9.** The packaging material of claim 1 wherein said thermoplastic resin comprises 50 wt. % or more of a crystalline thermoplastic resin selected from the group consisting of homopolyethylene resin, ethylene-α-olefin copolymer resin, very high molecular weight polyethylene resin, homopolypropylene resin, propylene-α-olefin copolymer resin, polyamide resin, polyacetal resin, and polytetrafluoroethylene resin.

**10.** The packaging material of claim 1 wherein said thermoplastic resin comprises 50 wt. % or more of a non-crystalline resin selected from the group consisting of polystyrene resin, ABS resin, polycarbonate resin, atactic polystyrene resin, poly (methyl methacrylate) resin, and high impact polystyrene resin.

**11.** The packaging material of claim 1 wherein said antioxidant is vitamin E.

**12.** The packaging material of claim 1 wherein said phenol antioxidant is combined with a phosphorous-containing antioxidant.

**13.** The packaging material of claim 1 wherein said substance adversely affecting photographic properties of photographic photosensitive materials is at least one of a mercaptan, acetaldehyde, an ammonium compound, hydrogen sulfide or an amine.

**14.** The packaging material of claim 1 wherein said substance adversely affecting photographic properties of photographic photosensitive materials is at least one of a polymerization catalyst of a thermoplastic resin and halogen compound, or a peroxide added in the modification of the thermoplastic resin.

**15.** The packaging material of claim 4 which further comprises calcium carbonate.

**Patentansprüche**

**1.** Verpackungsmaterial für photographische lichtempfindliche Materialien, das eine thermoplastische Harzzusammensetzung umfaßt, enthaltend:

(i) eine Substanz, welche photographische Eigenschaften von photographischen lichtempfindlichen Materialien beeinträchtigt,
(ii) 0,0005 bis 0,4 Gew.-% phenolisches Antioxidans,
(iii) 0,001 bis 10 Gew.-% eines Fettsäuremetallsalzes,
(iv) als das lichtabschirmende Material, 0,01 bis 30 Gew.-% Ruß, dessen Oberfläche mit einem Oberflächenbeschichtungsmaterial überzogen ist,
(v) ein Gleitmittel, und
(vi) ein thermoplastisches Harz,
mit der Maßgabe, daß das Gleitmittel kein Fettsäuremetallsalz ist.

**2.** Verpackungsmaterial nach Anspruch 1, wobei das Gleitmittel 0,01 bis 5 Gew.-% eines Silikongleitmittels mit einer Viskosität von 10 bis 1.000 $cm^2/s$ (1.000 bis 100.000 Centistoke) bei Normaltemperatur ist.

**3.** Verpackungsmaterial nach Anspruch 1, weiterhin umfassend 0,01 bis 3 Gew.-% einer Dibenzylidensorbitol-Verbindung.

**4.** Verpackungsmaterial nach Anspruch 1, weiterhin umfassend 0,1 bis 50 Gew.-% einer Adsorptionssubstanz, welche Substanzen, die photographische Eigenschaften von photographischen lichtempfindlichen Materialien beeinträchtigen, adsorbiert, oder welche durch chemische Reaktion damit stabilisiert.

**5.** Verpackungsmaterial nach Anspruch 1, weiterhin umfassend 0,01 bis 5 Gew.-% eines Chelatbildners.

**6.** Verpackungsmaterial nach Anspruch 1, 2 oder 3, weiterhin umfassend 0,01 bis 3 Gew.-% einer wasserfestmachenden Substanz.

**7.** Verpackungsmaterial nach Anspruch 1, weiterhin umfassend 0,01 bis 3 Gew.-% einer disubstituierten Benzylidensorbitol-Zusammensetzung, enthaltend ein festes Pulver eines durch die nachstehende allgemeine Formel dargestellten Dibenzylidensorbitol-Derivats:

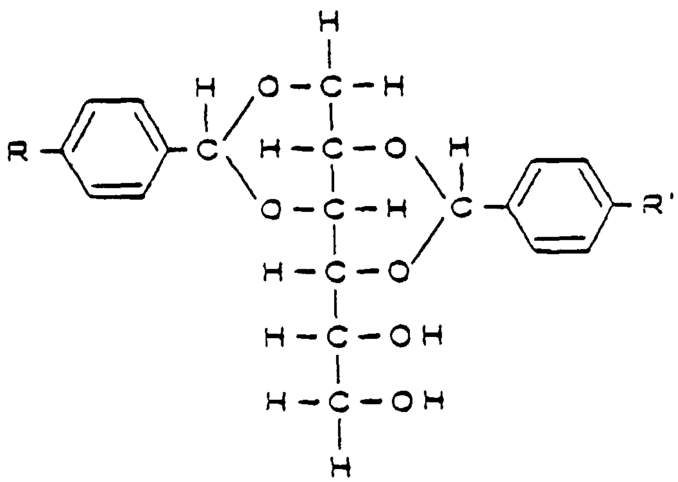

wobei R und R' in der Formel unabhängig voneinander ein Atom oder eine Gruppe, ausgewählt aus Chloratom, Methylgruppe und Ethylgruppe, bevorzugt Chloratom oder Methylgruppe, darstellen, und die nachfolgende höhere Fettsäure:

$$CH_3(CH_2)_nCOOH$$

wobei n in der Formel eine ganze Zahl von 14 bis 30 darstellt, als die essentiellen Bestandteile, und wobei die Oberfläche des festen Pulvers des Dibenzylidensorbitol-Derivats mit der höheren Fettsäure überzogen ist.

**8.** Verpackungsmaterial nach Anspruch 1, wobei der Ruß einen Cyanverbindungsgehalt von weniger als 0,01 % hat.

**9.** Verpackungsmaterial nach Anspruch 1, wobei das thermoplastische Harz 50 Gew.-% oder mehr eines kristallinen

thermoplastischen Harzes umfaßt, ausgewählt aus der Gruppe, bestehend aus Homopolyethylenharz, Ethylen-α-Olefin-Copolymerharz, Polyethylenharz mit sehr hohem Molekulargewicht, Homopolypropylenharz, Propylen-α-Olefin-Copolymerharz, Polyamidharz, Polyacetalharz und Polytetrafluorethylenharz.

**10.** Verpackungsmaterial nach Anspruch 1, wobei das thermoplastische Harz 50 Gew.-% oder mehr eines nicht-kristallinen Harzes umfaßt, ausgewählt aus der Gruppe, bestehend aus Polystyrolharz, ABS-Harz, Polycarbonatharz, ataktischem Polystyrolharz, Poly(methylmethacrylat)harz und schlagzähem Polystyrolharz.

**11.** Verpackungsmaterial nach Anspruch 1, wobei das Antioxidans Vitamin E ist.

**12.** Verpackungsmaterial nach Anspruch 1, wobei das phenolische Antioxidans mit einem phosphorhaltigen Antioxidans kombiniert ist.

**13.** Verpackungsmaterial nach Anspruch 1, wobei die Substanz, welche photographische Eigenschaften von photographischen lichtempfindlichen Materialien beeinträchtigt, mindestens eine aus einem Mercaptan, Acetaldehyd, einer Ammoniumverbindung, Schwefelwasserstoff oder einem Amin ist.

**14.** Verpackungsmaterial nach Anspruch 1, wobei die Substanz, welche photographische Eigenschaften von photographischen lichtempfindlichen Materialien beeinträchtigt, mindestens eine aus einem Polymerisationskatalysator eines thermoplastischen Harzes und einer Halogenverbindung, oder eines bei der Modifizierung des thermoplastischen Harzes zugegebenen Peroxids ist.

**15.** Verpackungsmaterial nach Anspruch 4, weiterhin umfassend Calciumcarbonat.

## Revendications

**1.** Matériau d'emballage pour des matériaux photosensibles photographiques qui comprend une composition de résine thermoplastique contenant:

(i) une substance affectant défavorablement les propriétés photographiques de matériaux photosensibles photographiques,
(ii) 0,0005 à 0,4% en poids d'un antioxydant phénolique,
(iii) 0,001 à 10% en poids d'un sel métallique d'acide gras,
(iv) comme matériau protecteur de lumière, 0,01 à 30% en poids de noir de carbone dont la surface est revêtue d'un matériau de revêtement de surface,
(v) un lubrifiant, et
(vi) une résine thermoplastique
avec la condition que le lubrifiant ne soit pas un sel métallique d'un acide gras.

**2.** Matériau d'emballage de la revendication 1, caractérisé en ce que le lubrifiant est 0,01 à 5% en poids d'un lubrifiant de silicone ayant une viscosité à température ordinaire de 10 à 1000 $cm^2/s$ (1000 à 100 000 centistokes).

**3.** Matériau d'emballage de la revendication 1, qui comprend en outre 0,01 à 3% en poids d'un composé de dibenzylidène sorbitol.

**4.** Matériau d'emballage de la revendication 1, qui comprend en outre 0,1 à 50% en poids d'une substance d'adsorption qui adsorbe ou stabilise par réaction chimique des substances affectant défavorablement les propriétés photographiques de matériaux photosensibles photographiques.

**5.** Matériau d'emballage de la revendication 1, qui comprend en outre 0,01 à 5% en poids d'un agent chélatant.

**6.** Matériau d'emballage de la revendication 1, 2 ou 3 qui comprend en outre 0,01 à 3% en poids d'une substance d'imperméabilisation à l'eau.

**7.** Matériau d'emballage de la revendication 1 qui comprend en outre 0,01 à 3% en poids d'une composition de benzylidène sorbitol disubstitué contenant une poudre solide d'un dérivé de dibenzylidène sorbitol représenté par la formule générale suivante et l'acide gras supérieur suivant comme composants essentiels et la surface de la poudre solide du dérivé de dibenzylidène sorbitol étant revêtue par l'acide gras supérieur:

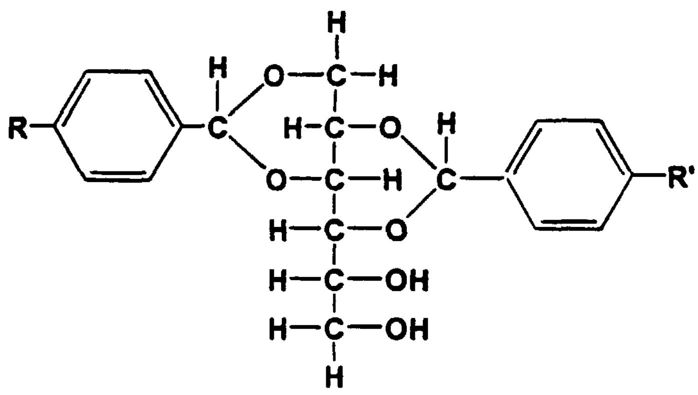

formule dans laquelle R et R' représentent indépendamment un atome ou un groupe sélectionné parmi un atome de chlore, un groupe méthyle et un groupe éthyle, de préférence un atome de chlore ou un groupe méthyle:

$$CH_3(CH_2)_nCOOH$$

formule dans laquelle n représente un nombre de 14 à 30.

**8.** Matériau d'emballage de la revendication 1, caractérisé en ce que le noir de carbone a une teneur en composé cyanogène inférieure à 0,01%.

**9.** Matériau d'emballage de la revendication 1, caractérisé en ce que ladite résine thermoplastique comprend 50% en poids ou plus d'une résine thermoplastique cristalline sélectionnée dans le groupe constitué par une résine homopolyéthylène, une résine copolymère d'éthylène et d'α-oléfine, une résine polyéthylène de masse moléculaire très élevée, une résine homopolypropylène, une résine copolymère de propylène et d'α-oléfine, une résine polyamide, une résine polyacétal, et une résine polytétrafluoroéthylène.

**10.** Matériau d'emballage de la revendication 1, caractérisé en ce que ladite résine thermoplastique comprend 50% en poids ou plus d'une résine non cristalline sélectionnée dans le groupe constitué par une résine polystyrène, une résine ABS, une résine polycarbonate, une résine polystyrène atactique, une résine poly(méthacrylate de méthyle), et une résine de polystyrène à impact élevé.

**11.** Matériau d'emballage de la revendication 1, caractérisé en ce que ledit antioxydant est la vitamine E.

**12.** Matériau d'emballage de la revendication 1, caractérisé en ce que ledit antioxydant phénolique est combiné avec un antioxydant contenant du phosphore.

**13.** Matériau d'emballage de la revendication 1, caractérisé en ce que ladite substance affectant défavorablement les propriétés photographiques des matériaux photosensibles photographiques est au moins une d'un mercaptan, l'acétaldéhyde, un composé d'ammonium, le sulfure d'hydrogène ou une amine.

**14.** Matériau d'emballage de la revendication 1, caractérisé en ce que ladite substance affectant défavorablement les propriétés photographiques des matériaux photosensibles photographiques est au moins une d'un catalyseur de polymérisation d'une résine thermoplastique et d'un composé halogéné, ou un peroxyde ajouté lors de la modification de la résine thermoplastique.

**15.** Matériau d'emballage de la revendication 4, qui comprend en outre du carbonate de calcium.

FIG.1

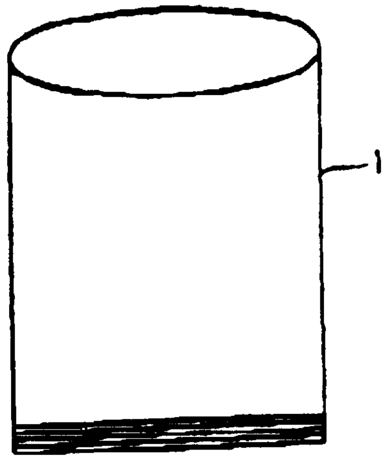


FIG.2

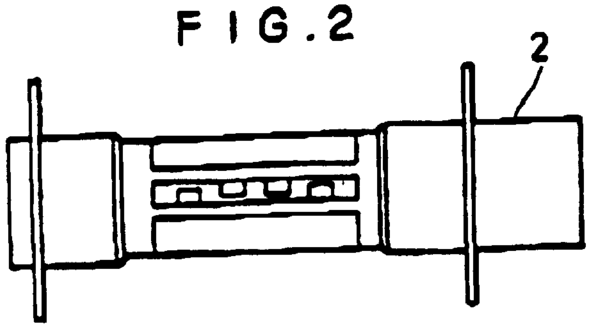


FIG.3

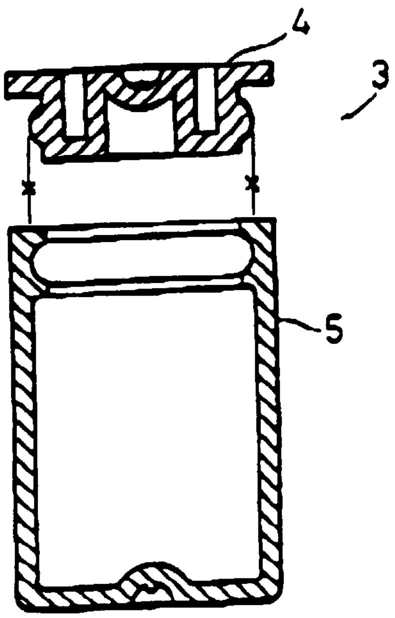


FIG.4

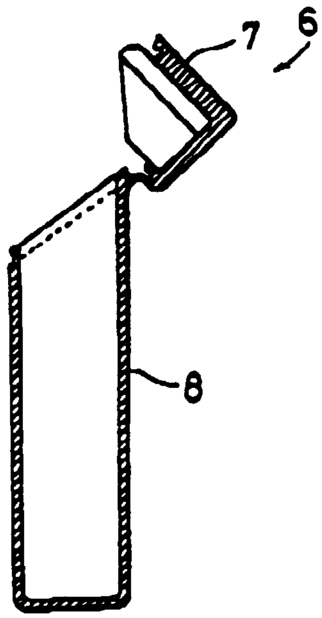

FIG. 5

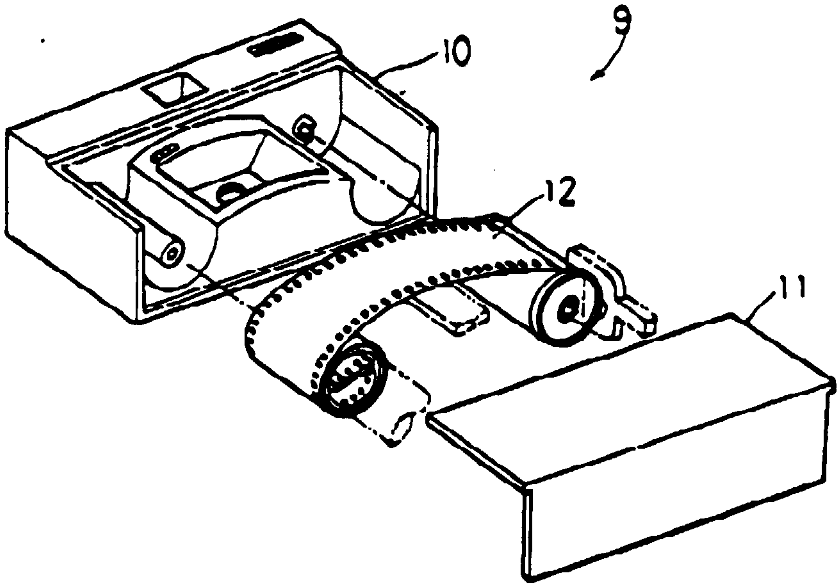


FIG. 6

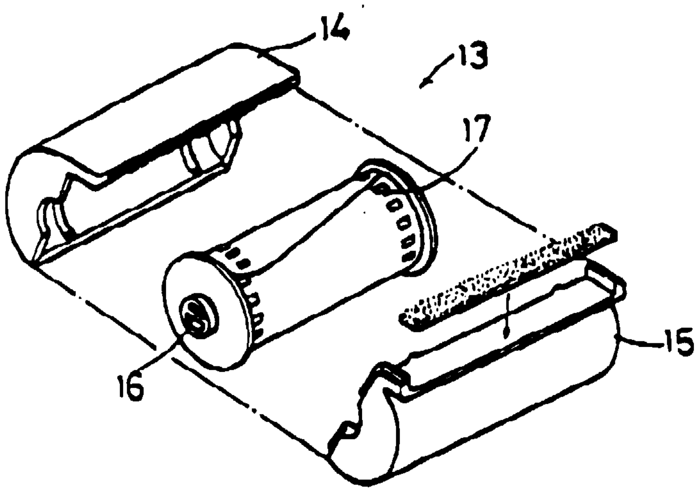

F I G. 7

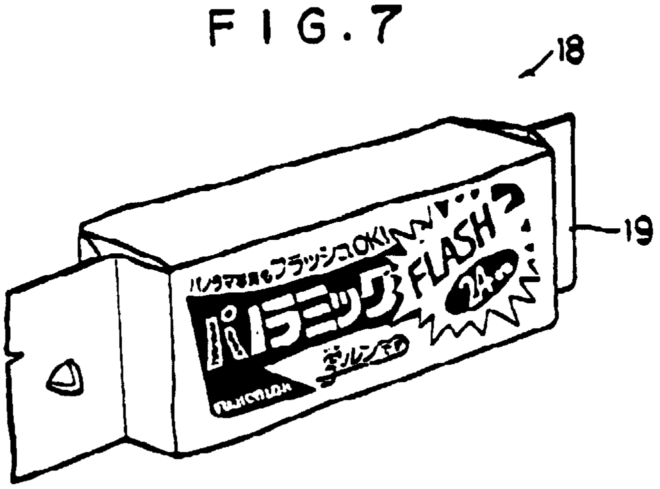


F I G. 8

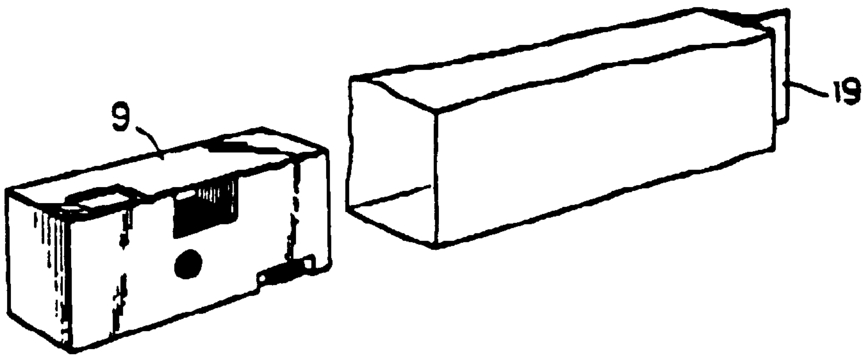


F I G. 9